# EUROPEAN PATENT APPLICATION

(11) **EP 2 808 837 A1**
(43) Date of publication of application: **03.12.2014**
(21) Application number: 13741183.1
(22) Date of filing: 24.01.2013
(51) Int. Cl.: G06Q 30/02, G06F 13/00, G06Q 50/10

(54) **SALES PROMOTION DEVICE, SALES PROMOTION SYSTEM, AND SALES PROMOTION METHOD**

(30) Priority: 27.01.2012 JP 2012015593; 16.03.2012 JP 2012060201
(71) Applicant: Toppan Printing Co., Ltd., Tokyo 110-8560 (JP)
(72) Inventor: SATO Yuji, Tokyo 110-8560 (JP)
(74) Representative: TBK
(86) International application number: PCT/JP2013/051488
(87) International publication number: WO 2013/111827

(57) **Abstract**

A sales promotion device which provides a plurality of campaign information receives an access from a terminal device of an introducer who participated in a campaign to a campaign participation registration site, generate campaign participation information on which a campaign ID, a parent ID assigned to the introducer, and points assigned to the introducer are corresponded. When introduction information is received from the terminal device of the introducer, another user belonging to a group of an SNS which is the same that of the introducer is treated as an introduced person, a child ID assigned to the introduced person or a user ID of the SNS is written in the campaign participation information, and the introduction information is distributed to the terminal device of the introduced person. When the introduced person participates in the campaign, the sales promotion device writes the points assigned to the introduced person in the campaign participation information, and adds introduction points to the introducer's points.

## Description

### [Technical Field]

The present invention relates to a sales promotion device, a sales promotion system, and a sales promotion method.

Priority is claimed on Japanese Patent Application No. 2012-015593 filed on January 27, 2012 and Japanese Patent Application No. 2012-060201 filed on March 16, 2012, the contents of which are incorporated herein by reference.

### [Background Art]

There is a system for assigning a privilege to a purchaser introducing a product when the purchaser of the product introduces the purchased product to another person and the other person purchases the introduced product (for example, see Patent Document 1). In this system, a purchaser of a product can participate in a campaign by accessing the campaign site of the product using a universal resource locator (URL) or a serial number assigned to the product. The purchaser of the product introduces product and campaign information by transmitting electronic mail in which URL information of a campaign, a user identifier (ID), such as an electronic mail address, and information of a product to be introduced are written to another person. If the other person receiving the electronic mail accesses the campaign site by purchasing the introduced product, a privilege such as points is assigned to the purchaser introducing the product.

In addition, there is a point management method of managing points according to a purchase of a product such as content (for example, see Patent Document 2). In this point management method, the purchaser purchases content from an Internet site using a mobile phone device and provides the purchased content or information of a purchase site of the content to a mobile phone device of the other person via a near field wireless link. When the other person receiving the provision of the information has purchased content, points are assigned to the purchaser providing the information.

### [Prior Art Documents]

### [Patent Documents]

### [Patent Document 1]

Japanese Unexamined Patent Application, First Publication No. 2007-293555

### [Patent Document 2]

Japanese Unexamined Patent Application, First Publication No. 2002-189916

### [Summary of Invention]

### [Problem to Be Solved by the Invention]

Conventionally, the provision of sales promotion information of a product or the management of a campaign site has been performed on a homepage of a product manufacturer. Thus, a consumer has had to confirm the homepage of each manufacturer so as to obtain information of the campaign. In addition, the notice on such a homepage is a message for the general public that may or may not actually be viewed by consumers, and does not necessarily lead to the promotion of purchase activities.

In addition, as in the above-described conventional technology, the provision of the electronic mail for other persons by a product purchaser or information about a product or campaign through word of mouth using near field wireless communication of a mobile phone device is information provision for specific persons. Thus, it is difficult to expect more expansion.

The present invention has been made in consideration of such circumstances, and provides a sales promotion device, a sales promotion system, and a sales promotion method that can enable consumers to easily obtain information of a campaign or the like related to sales promotion and effectively improve the sales promotion according to the campaign or the like.

### [Means to Solve the Problem]

A 1^{st} aspect of the present invention is a sales promotion device including: a storage unit configured to store a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person; a campaign information providing unit configured to transmit the campaign information read from the storage unit to the terminal device; a new registration unit configured to receive participation campaign-specific information for specifying the campaign of participation from the terminal device of the user who is an introducer and write the campaign participation information obtained by associating the campaign identification information of the campaign specified by the received participation campaign-specific information, the introducer identification information corresponding to the introducer, and the privilege information representing a privilege assigned to the introducer to the storage unit; an introduced person registration unit configured to receive introduction information representing introduction content related to the campaign from the terminal device of the introducer, specify another user belonging to the same group as the introducer as an introduced person by referring to the group information, and write introduced person identification information corresponding to the specified introduced person to the campaign participation information written by the new registration unit; a distribution unit configured to distribute the introduction information to the terminal device of the introduced person specified by the introduced person registration unit; and a privilege update unit configured to receive the participation campaign-specific information from the terminal device of the user who is the introduced person, specify the campaign participation information according to the campaign identification information of the campaign specified by the received participation campaign-specific information and the introduced person identification information corresponding to the introduced person, write the privilege information representing a privilege assigned to the introduced person by associating the specified campaign participation information with the introduced person identification information of the introduced person, and update the privilege information set by associating the specified campaign identification information with the introducer identification information to information in which an additional privilege is assigned.

A 2^{nd} aspect of the present invention is a sales promotion device according to the 1^{st} aspect, wherein the introduced person registration unit receives the introduction information from the terminal device of the introduced person, and specifies still another user belonging to the same group as the introduced person as an introduced person by referring to the group information.

A 3^{rd} aspect of the present invention is a sales promotion device according to the 1^{st} aspect, wherein the introduced person registration unit receives the introduction information from the terminal device of the introduced person, specifies still another user belonging to the same group as the introduced person as a new introduced person by referring to the group information, and writes campaign participation information obtained by associating the campaign identification information, the introducer identification information corresponding to the introduced person, and the introduced person identification information corresponding to the new introduced person to the storage unit.

A 4^{th} aspect of the present invention is a sales promotion device according to the 1^{st} aspect, wherein the introduced person registration unit writes child identification information as introduced person identification information to the specified introduced person and writes the assigned child identification information to the campaign participation information written by the new registration unit, and wherein the privilege update unit specifies the campaign participation information according to the campaign identification information of the campaign and the child identification information corresponding to the introduced person.

A 5^{th} aspect of the present invention is a sales promotion device according to the 4^{th} aspect, wherein the distribution unit further distributes the child identification information of the introduced person, and wherein the privilege update unit further receives the child identification information of the introduced person from the terminal device of the introduced person.

A 6^{th} aspect of the present invention is a sales promotion device according to the 1^{st} aspect, wherein the introduced person registration unit writes the user identification information of the specified introduced person as introduced person identification information to the campaign participation information written by the new registration unit, and wherein the privilege update unit assigns child identification information to the introduced person when receiving the participation campaign-specific information from the terminal device of the introduced person, writes the child identification information of the introduced person and the privilege information representing a privilege assigned to the introduced person by associating the campaign participation information specified by the campaign identification information and the user identification information of the introduced person with the user identification information of the introduced person, and updates the privilege information set by associating the specified campaign identification information with the introducer identification information to information in which an additional privilege is assigned.

A 7^{th} aspect of the present invention is a sales promotion device according to the 6^{th} aspect, wherein the privilege update unit further receives the user identification information of the introduced person from the terminal device of the introduced person.

An 8^{th} aspect of the present invention is a sales promotion device according to the 1^{st} aspect, wherein the introduced person registration unit receives the introduction information from the terminal device of the introducer, specifies other users belonging to the same group as the introducer by referring to the group information, and specifies a user yet unspecified as an introduced person for another introducer among the other specified users as an introduced person.

A 9^{th} aspect of the present invention is a sales promotion device according to the 1^{st} aspect, wherein the campaign information includes campaign execution place information representing a place at which the campaign is executed, and wherein the campaign information providing unit specifies campaign information including the campaign execution place information representing a place within a predetermined distance from a current position of the terminal device represented by position information received from the terminal device and transmits the specified campaign information to the terminal device.

A 10^{th} aspect of the present invention is a sales promotion device according to the 1^{st} aspect, wherein the storage unit further stores association of the campaign identification information and a serial number used in participation registration of the campaign, wherein the new registration unit receives the participation campaign-specific information and the serial number in the campaign from the terminal device of the introducer and writes the campaign participation information to the storage unit and writes the received serial number as a used serial number to the storage unit in association with the campaign identification information when the received serial number is not stored in the storage unit as the used serial number in correspondence with the campaign identification information of the campaign specified by the received participation campaign-specific information, and wherein the privilege update unit receives the participation campaign-specific information and the serial number from the terminal device of the introduced person, writes the privilege information representing a privilege assigned to the introduced person by associating the specified campaign participation information with introduced person identification information corresponding to the introduced person when the received serial number is not stored as the used serial number in the storage unit in correspondence with the campaign identification information of the campaign specified by the received participation campaign-specific information, updates the privilege information set by associating the specified campaign identification information with the introducer identification information to information in which an additional privilege is assigned, and further writes the received serial number as the used serial number to the storage unit in association with the received campaign identification information.

An 11^{th} aspect of the present invention is a sales promotion device according to the 1^{st} aspect, further including: a member registration providing unit configured to provide a member registration site to the terminal device of the user, notify the new registration unit of campaign identification information corresponding to a join destination of an introducer, and output campaign identification information corresponding to a join destination of an introduced person to the privilege update unit, wherein the new registration unit writes campaign participation information obtained by associating the campaign identification information corresponding to the join destination of the introducer, the introducer identification information corresponding to the introducer, and the privilege information representing a privilege assigned to the introducer to the storage unit, and wherein the privilege update unit specifies the campaign participation information according to the campaign identification information corresponding to the join destination of the introduced person and the introduced person identification information corresponding to the introduced person.

A 12^{th} aspect of the present invention is a sales promotion device according to the 10^{th} aspect, wherein the participation campaign-specific information and the serial number are information read by the terminal device from an image or a character assigned to a purchased product or a printing material to be used when a product is purchased or a service is used.

A 13^{th} aspect of the present invention is a sales promotion device according to the 10^{th} aspect, wherein the campaign information providing unit distributes the participation campaign-specific information to the terminal device.

A 14^{th} aspect of the present invention is a sales promotion device according to the 10^{th} aspect, wherein the participation campaign-specific information and the serial number are information received by the terminal device from a shopping server providing a shopping site on a network to which the terminal device and the sales promotion device are connected.

A 15^{th} aspect of the present invention is a sales promotion device according to the 10^{th} aspect, further including: a shopping site providing unit configured to provide a shopping site to the terminal device of the user and generate a serial number when a shopping process of the user in the shopping site has ended, wherein the new registration unit specifies the campaign from a target of shopping of the introducer in the shopping site provided by the shopping site providing unit and receives the serial number generated when a shopping process of the introducer has ended from the shopping site providing unit, and wherein the new registration unit further specifies the campaign from a target of shopping of the introduced person in the shopping site provided by the shopping site providing unit and receives the serial number generated when a shopping process of the introduced person has ended from the shopping site providing unit.

A 16^{th} aspect of the present invention is a sales promotion device according to the 10^{th} aspect, wherein the campaign information providing unit transmits a coupon, the participation campaign-specific information, and the serial number to the terminal device of the user, and writes identification information of the user and the serial number to the storage unit, wherein the new registration unit receives the participation campaign-specific information and the serial number from a terminal device of a shop used by the introducer in place of the terminal device of the introducer and specifies the introducer from user identification information stored in the storage unit in correspondence with the serial number, and wherein the privilege update unit receives the participation campaign-specific information and the serial number from a terminal device of a shop used by the introduced person in place of the terminal device of the introduced person and specifies the introduced person from user identification information stored in the storage unit in correspondence with the serial number.

A 17^{th} aspect of the present invention is a sales promotion device according to the 1^{st} aspect, wherein the campaign information providing unit further transmits the participation campaign-specific information and information for specifying the user to the terminal device of the user and associates and writes the user identification information and the information for specifying the user to the storage unit, wherein the new registration unit receives the participation campaign-specific information and the information for specifying the user from a terminal device of a shop used by the introducer in place of the terminal device of the introducer, and specifies the introducer from user identification information stored in the storage unit in correspondence with the information for specifying the user, and wherein the privilege update unit receives the participation campaign-specific information and the information for specifying the user from a terminal device of a shop used by the introduced person in place of the terminal device of the introduced person, and specifies the introduced person from user identification information stored in the storage unit in correspondence with the information for specifying the user.

An 18^{th} aspect of the present invention is a sales promotion device according to the 1^{st} aspect, wherein the storage unit associates and stores the user identification information and a card number, wherein the sales promotion device further includes: a card registration unit configured to receive a participation declaration notification for the campaign from the terminal device of the introducer or the terminal device of the introduced person, transmit participation campaign-specific information of the campaign for which participation has been declared according to the participation declaration notification and the card number corresponding to the user identification information of the introducer or the introduced person to the card management device for managing a card of the card number, and issue a request to transmit the participation campaign-specific information and the card number when detecting participation in the campaign in which the participation has been declared using the card of the transmitted card number, wherein the new registration unit receives the participation campaign-specific information and the card number of the card used by the introducer from the card management device for managing the card used by the introducer in place of the terminal device of the introducer and specifies the introducer from the user identification information stored in the storage unit in correspondence with the card number, and wherein the privilege update unit receives the participation campaign-specific information and the card number of the card used by the introduced person from the card management device for managing the card used by the introduced person in place of the terminal device of the introduced person and specifies the introduced person from the user identification information stored in the storage unit in correspondence with the card number.

A 19^{th} aspect of the present invention is a sales promotion device according to the 1^{st} aspect, wherein the new registration unit receives the participation campaign-specific information and a card number of a card used by the introducer from the terminal device of the introducer, inquires about the participation in the campaign specified by the participation campaign-specific information by transmitting the received card number to the card management device for managing the card used by the introducer, and writes the campaign participation information to the storage unit when receiving a campaign participation confirmation notification according to the inquiry, and wherein the privilege update unit receives the participation campaign-specific information and a card number of a card used by the introduced person from the terminal device of the introduced person, inquires about participation in the campaign specified by the participation campaign-specific information by transmitting the received card number to a card management device for managing the card used by the introduced person, writes the privilege information representing a privilege assigned to the introduced person by associating the specified campaign participation information with introduced person identification information of the introduced person when the campaign participation confirmation notification has been received according to the inquiry, and updates the privilege information set by associating the specified campaign identification information with the introducer identification information to information in which an additional privilege is assigned.

A 20^{th} aspect of the present invention is a sales promotion device according to the 1^{st} aspect, wherein the new registration unit receives the participation campaign-specific information, a card number of a card used by the introducer, and a product purchase date from the terminal device of the introducer, inquires about a shop in which a product has been purchased by transmitting the received card number and the received product purchase date to a card management device for managing the card used by the introducer, inquires about a purchase history server of the shop specified by shop identification information acquired according to the inquiry about participation in a campaign specified by the participation campaign-specific information, and writes the campaign participation information to the storage unit when receiving a campaign participation confirmation notification according to the inquiry, and wherein the privilege update unit receives the participation campaign-specific information, a card number of a card used by the introduced person, and a product purchase date from the terminal device of the introduced person, inquires about a shop in which a product has been purchased by transmitting the received card number and the received product purchase date to a card management device for managing the card used by the introduced person, inquires about a purchase history server of the shop specified by shop identification information acquired according to the inquiry about participation in a campaign specified by the participation campaign-specific information, writes the privilege information representing a privilege assigned to the introduced person by associating the specified campaign participation information with the introduced person identification information of the introduced person when a campaign participation confirmation notification has been received according to the inquiry, and updates the privilege information set by associating the specified campaign identification information with the introducer identification information to information in which an additional privilege is assigned.

A 21^{th} aspect of the present invention is a sales promotion device according to the 1^{st} aspect, wherein the privilege update unit further receives information of a use amount of service and further updates the privilege information set by associating the specified campaign participation information with the introducer identification information to information in which a privilege corresponding to the use amount of service is assigned.

A 21^{th} aspect of the present invention is a sales promotion device according to the 1^{st} aspect, wherein the new registration unit further receives information of a use amount of service and writes the campaign participation information in which the privilege information representing a privilege assigned to the introducer has been set in correspondence with the use amount of service to the storage unit, and wherein the privilege update unit further receives information of a use amount of service and writes the privilege information representing a privilege assigned to the introduced person in correspondence with the use amount of service by associating the specified campaign participation information with introduced person identification information of the introduced person.

A 23^{th} aspect of the present invention is a sales promotion device according to the 1^{st} aspect, wherein the participation campaign-specific information is an address used in access to the sales promotion device.

A 24^{th} aspect of the present invention is a sales promotion device according to the 1^{st} aspect, wherein the privilege information is points exchangeable for an article or service or is a right to participate in an event.

A 25^{th} aspect of the present invention is a sales promotion system including a terminal device of a user and a sales promotion device, wherein the sales promotion device includes: a storage unit configured to store a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person; a campaign information providing unit configured to transmit the campaign information read from the storage unit to the terminal device; a new registration unit configured to receive participation campaign-specific information for specifying the campaign of participation from the terminal device of the user who is an introducer and write the campaign participation information obtained by associating the campaign identification information of the campaign specified by the received participation campaign-specific information, the introducer identification information corresponding to the introducer, and the privilege information representing a privilege assigned to the introducer to the storage unit; an introduced person registration unit configured to receive introduction information representing introduction content related to the campaign from the terminal device of the introducer, specify another user belonging to the same group as the introducer as an introduced person by referring to the group information, and write introduced person identification information corresponding to the specified introduced person to the campaign participation information written by the new registration unit; a distribution unit configured to distribute the introduction information to the terminal device of the introduced person specified by the introduced person registration unit; and a privilege update unit configured to receive the participation campaign-specific information from the terminal device of the user who is the introduced person, specify the campaign participation information according to the campaign identification information of the campaign specified by the received participation campaign-specific information and the introduced person identification information corresponding to the introduced person, write the privilege information representing a privilege assigned to the introduced person by associating the specified campaign participation information with the introduced person identification information of the introduced person, and update the privilege information set by associating the specified campaign identification information with the introducer identification information to information in which an additional privilege is assigned, wherein the terminal device includes: a display unit configured to display information; and a processing unit configured to receive campaign information representing content of a campaign from the sales promotion device and display the received campaign information on the display unit, wherein the processing unit provided in the terminal device of the user who is an introducer transmits participation campaign-specific information for specifying a participation campaign to the sales promotion device and transmits introduction information representing introduction content about the campaign to the sales promotion device, and wherein the processing unit provided in the terminal device of the user who is an introduced person receives the introduction information from the sales promotion device to cause the display unit to display the received introduction information and transmits the participation campaign-specific information to the sales promotion device when participating in the campaign introduced by the introduction information.

A 26^{th} aspect of the present invention is a sales promotion method including: storing, by a sales promotion device, a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person in a storage unit; transmitting, by the sales promotion device, the read campaign information to the terminal device; receiving, by the sales promotion device, participation campaign-specific information for specifying the campaign of participation from the terminal device of the user who is the introducer and writing the campaign participation information obtained by associating the campaign identification information of the campaign specified by the received participation campaign-specific information, the introducer identification information corresponding to the introducer, and the privilege information representing a privilege assigned to the introducer to the storage unit; receiving, by the sales promotion device, introduction information representing introduction content related to the campaign from the terminal device of the introducer, specifying another user belonging to the same group as the introducer as an introduced person by referring to the group information, and writing introduced person identification information corresponding to the specified introduced person to the written campaign participation information; distributing, by the sales promotion device, the introduction information to the terminal device of the specified introduced person; and receiving, by the sales promotion device, the participation campaign-specific information from the terminal device of the user who is the introduced person, specifying the campaign participation information according to the campaign identification information of the campaign specified by the received participation campaign-specific information and the introduced person identification information corresponding to the introduced person, writing the privilege information representing a privilege assigned to the introduced person by associating the specified campaign participation information with the introduced person identification information of the introduced person, and updating the privilege information set by associating the specified campaign identification information with the introducer identification information to information in which an additional privilege is assigned.

A 27^{th} aspect of the present invention is a sales promotion method including: storing, by a sales promotion device, a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person in a storage unit; transmitting, by the sales promotion device, the read campaign information to the terminal device; displaying, by the terminal device, the campaign information received from the sales promotion device; transmitting, by the terminal device of the user who is an introducer, participation campaign-specific information for specifying a participation campaign to the sales promotion device; receiving, by the sales promotion device, participation campaign-specific information from the terminal device of the introducer and writing the campaign participation information obtained by associating the campaign identification information of the campaign specified by the received participation campaign-specific information, the introducer identification information corresponding to the introducer, and the privilege information representing a privilege assigned to the introducer to the storage unit; transmitting, by the terminal device of the introducer, introduction information representing introduction content about the campaign to the sales promotion device; receiving, by the sales promotion device, introduction information from the terminal device of the introducer, specifying another user belonging to the same group as the introducer as an introduced person by referring to the group information, and writing introduced person identification information corresponding to the specified introduced person to the written campaign participation information; distributing, by the sales promotion device, the introduction information to the terminal device of the specified introduced person; displaying, by the terminal device of the user who is an introduced person, the introduction information received from the sales promotion device; transmitting, by the terminal device of the user who is the introduced person, participation campaign-specific information to the sales promotion device when participating in the campaign introduced according to the introduction information; and receiving, by the sales promotion device, the participation campaign-specific information from the terminal device of the introduced person, specifying the campaign participation information according to the campaign identification information of the campaign specified by the received participation campaign-specific information and the introduced person identification information corresponding to the introduced person, writing the privilege information representing a privilege assigned to the introduced person by associating the specified campaign participation information with the introduced person identification information of the introduced person, and updating the privilege information set by associating the specified campaign identification information with the introducer identification information to information in which an additional privilege is assigned.

### [Effect of the Invention]

According to the 1^{st}, 25^{th}, 26^{th}, and 27^{th} aspects of the present invention, a user who is a consumer can easily obtain information of a campaign or the like related to sales promotion. In addition, according to the 1^{st}, 25^{th}, 26^{th}, and 27^{th} aspects of the present invention, it is possible to easily transmit the introduction of a product or a campaign from the user (introducer) participating in the campaign to another user (introduced user) using a group such as a social network site (SNS).

Then, when the introduced person has participated in the campaign by purchasing the product or the like, a privilege is also assigned to the introducer introducing the campaign to the introduced person. Consequently, it is possible to effectively improve the effect of sales promotion because the introducer has the positive desire to introduce the campaign to the introduced person. In addition, because the introduced person is an acquaintance belonging to the same group in an SNS or the like as the introducer transmitting the introduction information, content of the introduction information is considered to have high credibility. Consequently, the introduced person tends to be interested in an introduced product or the like, and therefore it is also possible to effectively improve the effect of sales promotion.

According to the 2^{nd} aspect of the present invention, when the sales promotion device has received introduction information of the introduced person, a member of another group in an SNS or the like to which the introduced person belongs is assumed to be a new introduced person. Thereby, when the introduced person creating the introduction information belongs to a plurality of groups, introduction information is also transmitted to the member of a different group from the introducer. Then, when the new introduced person has participated in the campaign by purchasing a product or the like, a privilege is also assigned to the original introducer. Consequently, it is possible to effectively improve the effect of sales promotion because the introducer has the positive desire to introduce the campaign.

According to the 3^{rd} aspect of the present invention, when the sales promotion device has received introduction information of the introduced person, a member of another group in an SNS or the like to which the introduced person belongs is assumed to be a new introduced person, and the introduced person transmitting introduction information serves as an introducer for the new introduced person. Thereby, when the introduced person creating the introduction information belongs to a plurality of groups, introduction information is also transmitted to the member of a different group from a first introducer. Then, when the new introduced person has participated in the campaign by purchasing a product or the like, a privilege is also assigned to the introduced person introducing the campaign to the new introduced person. Consequently, it is possible to effectively improve the effect of sales promotion because the introduced person also has the positive desire to introduce the campaign.

According to the 4^{th} aspect of the present invention, when the sales promotion device has received introduction information by the introducer, child identification information is assigned to the introduced person. Consequently, the introduced person can be specified by the child identification information.

According to the 5^{th} aspect of the present invention, the terminal device of the introduced person transmits the child identification information received from the sales promotion device along with introduction information at the time of campaign registration. Thereby, the sales promotion device can easily determine the introduced person.

According to the 6^{th} aspect of the present invention, the child identification information is assigned when the introduced person registers campaign participation. Consequently, because it is not necessary to transmit the child identification information when the introduced person registers the campaign participation, it is possible to register the campaign participation in a simple operation.

According to the 7^{th} aspect of the present invention, the terminal device of the introduced person transmits his/her own user identification information along with introduction information at the time of campaign registration. Thereby, the sales promotion device can specify that he/she is the introduced person according to the received user identification information when the introduced person has participated in the SNS.

According to the 8^{th} aspect of the present invention, one of members belonging to the same group as the introducer other than members serving as still other introducers is assumed to be an introduced person. Consequently, because one introduced person is associated with only one introducer, the introducer has the motivation to quickly participate in the campaign.

According to the 9^{th} aspect of the present invention, information of the campaign is distributed to a mobile phone or the like possessed by the user when the user passes near a shop or a shopping district in which the campaign is executed. Consequently, the user tends to participate in the campaign and it is possible to effectively improve the sales promotion effect of the campaign.

According to the 10^{th} aspect of the present invention, the sales promotion device confirms whether a serial number of a product or the like received during campaign participation registration is a serial number already used in the campaign participation registration. Consequently, it is possible to prevent a privilege from being assigned to the introducer or the introduced person twice for one purchase.

According to the 11^{th} aspect of the present invention, the sales promotion device can provide member registration sites of various types of enterprises, and designate the member registration as a campaign target. In addition, it is not necessary for the introducer or the introduced person to access the campaign participation registration site again after the member registration.

According to the 12^{th} aspect of the present invention, the user reads information written on a product, a receipt, or the like using the terminal device. Consequently, a manufacturer, a sales shop, or the like can manage a product serving as a campaign target or designate the campaign target as a shop, a shopping district, or the like.

According to the 13^{th} aspect of the present invention, the sales promotion device distributes the URL of the campaign participation registration site along with campaign information. Consequently, because the URL can be used if the conventional serial number is attached to the product even when the URL of the campaign participation registration site is not newly attached to the product, the manufacturer or the like can easily execute the campaign.

According to the 14^{th} aspect of the present invention, it is possible to designate online shopping using the Internet as a campaign target.

According to the 15^{th} aspect of the present invention, the sales promotion device can provide an online shopping site and designate shopping in this site as a campaign target. In addition, it is not necessary for the introducer or the introduced person to access the campaign participation registration site again after online shopping. In addition, because it is not necessary for an enterprise to construct the online shopping site by itself, the enterprise can easily execute the campaign.

According to the 16^{th} aspect of the present invention, because the sales promotion device issues a coupon and therefore the introducer or the introduced person can enjoy an additional service such as a discount in the shop according to the issued coupon, the ability of the shop to attract customers is improved. At this time, because the participation campaign-specific information and the serial number is read from the printed coupon in the terminal device of the shop, the introducer or the introduced person can acquire the coupon through a personal computer located at a home or the like.

According to the 17^{th} aspect of the present invention, the sales promotion device includes participation campaign-specific information and information for specifying the user in special sales information of the shop to distribute the information to the user. In addition, the sales promotion device performs campaign participation registration by reading the participation campaign-specific information and the information for specifying the user from paper on which special sales information has been printed by the user in the terminal device of the shop. Consequently, it is not necessary for the user to perform campaign registration by himself or herself. In addition, because the campaign registration can be performed using a personal computer, a portable terminal, or the like in the shop, the campaign can be executed without imposing a burden such as remodeling of a point of sale (POS) system.

According to the 18^{th} aspect of the present invention, the sales promotion device performs campaign registration by receiving a card number of a card used by the introducer or the introduced person during payment in the shop in which the campaign is executed from a card management server of a company which manages the card. Consequently, it is possible not only to improve the effect of sales promotion in a shop in which a campaign is executed, but also to promote the use of a credit card or a point card.

According to the 19^{th} aspect of the present invention, the sales promotion device performs campaign registration of the introducer or the introduced person and assigns a privilege after inquiring of the company's card management server, which manages the card used by the introducer or the introduced person in the shop, about a usage record. Consequently, it is possible not only to improve the effect of sales promotion in a shop in which a campaign is executed, but also to promote the use of a credit card or a point card. In addition, it is only necessary for the card management server to respond to the inquiry by referring to a previous purchase history or the like, and the load of a system change in the card management company is low.

According to the 20^{th} aspect of the present invention, the sales promotion device inquires of the company's card management server, which manages the card used by the introducer or the introduced person in the shop, about a shop in which a product has been purchased. Further, the sales promotion device performs campaign registration of the introducer or the introduced person and assigns a privilege after inquiring of a purchase history server of the shop obtained by the inquiry about a usage record, and assigns a privilege. Consequently, it is possible not only to improve the effect of sales promotion of products for which a campaign is executed, but also to promote the use of a credit card or a point card. In addition, even when information of the product purchased in the shop is not managed, it is only necessary for the card management server to respond to the inquiry by referring to a conventional purchase history or the like, and the load of a system change in the card management company is low. In addition, it is only necessary for the card management server to respond to the inquiry by referring to a conventional purchase history or the like for a purchase history server of a shop, and the load of a system change in the shop is low.

According to the 21^{st} aspect of the present invention, it is possible to increase the number of points assigned to the introducer according to an amount of money the introduced person has used on the service, the number of persons or the like when the shop has been used, or the like.

According to the 22^{nd} aspect of the present invention, it is possible to increase the number of points assigned to the introducer or the introduced person according to an amount of money the introducer or the introduced person has used on the service and the number of persons or the like when the shop has been used.

According to the 23^{rd} aspect of the present invention, the introducer or the introduced person can directly access a campaign participation registration site of an individual campaign because the URL is used as the participation campaign-specific information. Thereby, the introducer or the introduced person saves the effort and time of searching for an address of the campaign participation registration site.

According to the 24^{th} aspect of the present invention, it is possible to determine a type of privilege to be assigned according to a subject which executes the campaign.

### [Brief Description of Drawings]

Fig. 1 is a functional block diagram illustrating a configuration of a sales promotion system according to a first embodiment of the present invention.
Fig. 2A is a diagram illustrating a first setting example of campaign information according to the first embodiment.
Fig. 2B is a diagram illustrating a second setting example of campaign information according to the first embodiment.
Fig. 3 is a diagram illustrating a setting example of user information according to the first embodiment.
Fig. 4 is a diagram illustrating a setting example of group information according to the first embodiment.
Fig. 5 is a diagram illustrating a setting example of group writing information according to the first embodiment.
Fig. 6A is a diagram illustrating a first setting example of campaign participation information according to the first embodiment.
Fig. 6B is a diagram illustrating a second setting example of campaign participation information according to the first embodiment.
Fig. 7 is a diagram illustrating a setting example of used serial number information according to the first embodiment.
Fig. 8 is a diagram illustrating a relationship between a user and a group according to the first embodiment.
Fig. 9 is a sequence diagram of a campaign participation registration process in the sales promotion system according to the first embodiment.
Fig. 10 is a diagram illustrating a campaign participation registration processing flow in a sales promotion device according to the first embodiment.
Fig. 11 is a diagram illustrating a campaign participation registration processing flow in the sales promotion device according to the first embodiment.
Fig. 12 is a diagram illustrating a display image of a screen displayed by the sales promotion device according to the first embodiment on a terminal device.

### [Embodiment for Carrying Out the Invention]

Hereinafter, first to third embodiments of the present invention will be described in detail with reference to the drawings.

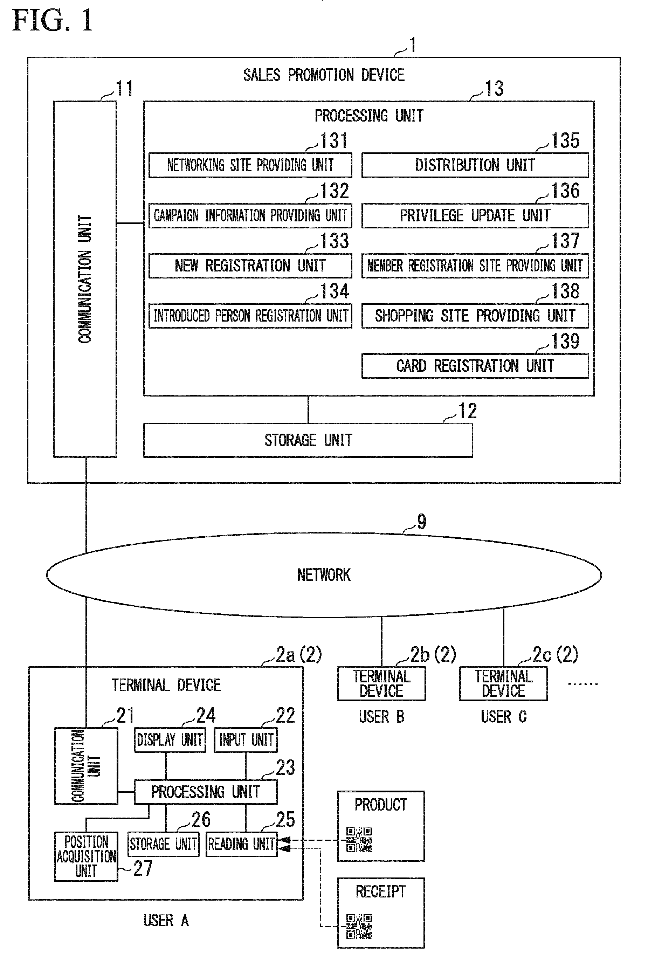

Fig. 1 is a block diagram illustrating a configuration of a sales promotion system according to the first embodiment of the present invention.

The sales promotion system of the first embodiment constructs a site (hereinafter referred to as a "campaign site") on the Internet in which campaign information such as content of a campaign or sales promotion information of a plurality of products is aggregated. Through the campaign site, the user can easily search for and obtain the campaign information. A campaign target, for example, can be a product, a shop, a shopping district, or the like.

The sales promotion system of the first embodiment assigns a privilege such as points exchangeable for a product or a service to the user participating in the campaign by purchasing a product or the like. Along with this, the sales promotion system can easily provide another user with introduction information which is writing of impressions about a product, a campaign, or the like, an introduction, or the like. When the other user (introduced person) receiving the provision of the introduction information purchases the product and accesses the campaign participation registration site for registering the campaign participation, the sales promotion system assigns a privilege to the other user (introduced person). Further, the sales promotion system also assigns an additional privilege to the user (introducer) providing the introduction information. Thereby, product sales promotion and campaign participation promotion by word of mouth are possible. Thus, the sales promotion system provides the campaign participation registration site by an SNS. Then, the sales promotion system provides the introduction information about the product or the campaign from the user participating in the campaign to the other user using a group of the user created in the SNS. Also, the privilege can be a privilege unique to a manufacturer or a shop, and presentation of a discount ticket, an entry qualification for an event such as a game, or the like in addition to point assignment can be arbitrarily set as the privilege.

As illustrated in Fig. 1, the sales promotion system is configured by connecting the sales promotion device 1 and the terminal device 2 of the user through the network 9 such as the Internet. Hereinafter, terminal devices 2 of users A, B, ... are referred to as terminal devices 2a, 2b, ..., respectively.

When the campaign target is a product, a URL of the campaign participation registration site and an individual serial number (No.) of the product are printed on the exterior, inside, or the like of a package of the product or attached to the product through a seal or the like.

In addition, when the campaign target is a shop, a shopping district, or the like, a URL of a campaign participation registration site of the shop or the shopping district and an individual serial number of a receipt are printed on the receipt. Alternatively, campaign application paper on which the URL of the campaign participation registration site and the individual serial number have been printed may be distributed to shopping customers.

Hereinafter, although the URL and the serial number will be described to be represented using a two-dimensional barcode, a barcode may be used or the URL and the serial number may be attached to the product in text or numbers or printed on a receipt.

The sales promotion device 1, for example, can be implemented by one or more computer servers or the like, and includes a communication unit 11, a storage unit 12, and a processing unit 13.

The communication unit 11 transmits and receives information to and from the terminal device 2 via the network 9.

The storage unit 12 stores various types of information such as campaign information, user information, group information, group writing information, campaign participation information, used serial number information. The campaign information represents content of the campaign such as an operating procedure of each campaign or sales promotion information of a product. The user information represents information about the user such as address information of each user. The group information represents a user belonging to each group of the SNS. The group writing information represents information written by the user according to each group of the SNS. The campaign participation information represents the user participating the campaign and privilege assigned to the user. The used serial number information represents a serial number used in campaign participation registration.

The processing unit 13 includes a networking site providing unit 131, a campaign information providing unit 132, a new registration unit 133, an introduced person registration unit 134, a distribution unit 135, a privilege update unit 136, a member registration site providing unit 137, a shopping site providing unit 138, and a card registration unit 139.

The networking site providing unit 131 provides a communication site of each group of the SNS. The campaign information providing unit 132 provides the campaign information to the terminal device 2 of the user.

The new registration unit 133 specifies a campaign from participation campaign-specific information received from the terminal device 2 of the user, that is, a URL of the campaign participation registration site used for access. If there is no introducer of a campaign specified in the group to which the user belongs, the new registration unit 133 assigns a parent identifier (ID) which is introducer identification information of the campaign to the user. The user to which the parent ID has been assigned becomes an "introducer." The new registration unit 133 generates campaign participation information in which a campaign ID (campaign identification information) for identifying the campaign, an assigned parent ID, and privilege information representing privilege assigned to the introducer are set, and writes the generated campaign participation information to the storage unit 12.

Upon receiving introduction information representing impressions of a campaign target, introduction of the campaign, or the like from the terminal device 2 of the user who is the introducer, the introduced person registration unit 134 refers to the group information stored in the storage unit 12. Then, the introduced person registration unit 134 specifies another user belonging to the same group as the introducer as the introduced person. The introduced person registration unit 134 writes introduced person identification information of the introduced person to the campaign participation information in which the parent ID of the introducer is registered. The introduced person identification information is a child ID (child identification information) of each campaign assigned to the introduced person or a user ID (user identification information) for specifying the introduced person in the SNS.

The distribution unit 135 distributes the introduction information received from the terminal device 2 of the introducer to the terminal device 2 of the introduced person.

The privilege update unit 136 writes the privilege information representing a privilege assigned to the introduced person to the campaign participation information. In the campaign participation information, the campaign ID of the campaign represented by the participation campaign-specific information received from the terminal device 2 of the introduced person and introduced person identification information of the introduced person of a participation campaign-specific information transmission source are registered. Further, the privilege update unit 136 updates the privilege information of the introducer set in the campaign participation information to content in which an additional privilege according to introduction is added.

The member registration site providing unit 137 provides a member registration site for allowing the user to join a member service of an enterprise or the like for the terminal device 2. After a joining procedure process in the member registration site, the member registration site providing unit 137 outputs a campaign ID of the member service the user has joined to the new registration unit 133 when the introducer has joined, and outputs the campaign ID to the privilege update unit 136 when the introduced person has joined.

The shopping site providing unit 138 provides an online shopping site to the terminal device 2 of the user. After a shopping process in the online shopping ends, the shopping site providing unit 138 outputs the campaign ID of the campaign in which the purchased product or service serves as a campaign target and the serial number to the new registration unit 133.

The card registration unit 139 registers a card such as a credit card or a point card used by the user in the shopping.

The terminal device 2, for example, is a mobile phone terminal, a personal computer, or the like, and includes a communication unit 21, an input unit 22, a processing unit 23, a display unit 24, a reading unit 25, a storage unit 26, and a position acquiring unit 27.

The communication unit 21 transmits and receives information via the network 9. The input unit 22 is a keyboard, a mouse, a button, a touch panel, or the like, and receives an input of information according to the user's operation.

The display unit 24 is a display such as a liquid crystal display (LCD). The reading unit 25 reads a two-dimensional barcode or character information. The position acquiring unit 27, for example, is the Global Positioning System (GPS), and acquires a current position. The processing unit 23 causes the display unit 24 to display data received from the sales promotion device 1 via the communication unit 21 or transmits information to the sales promotion device 1 via the communication unit 21 according to an instruction input through the input unit 22. In addition, the processing unit 23 periodically transmits position information representing the current position acquired by the position acquiring unit 27 to the sales promotion device 1. The storage unit 26 stores various types of information.

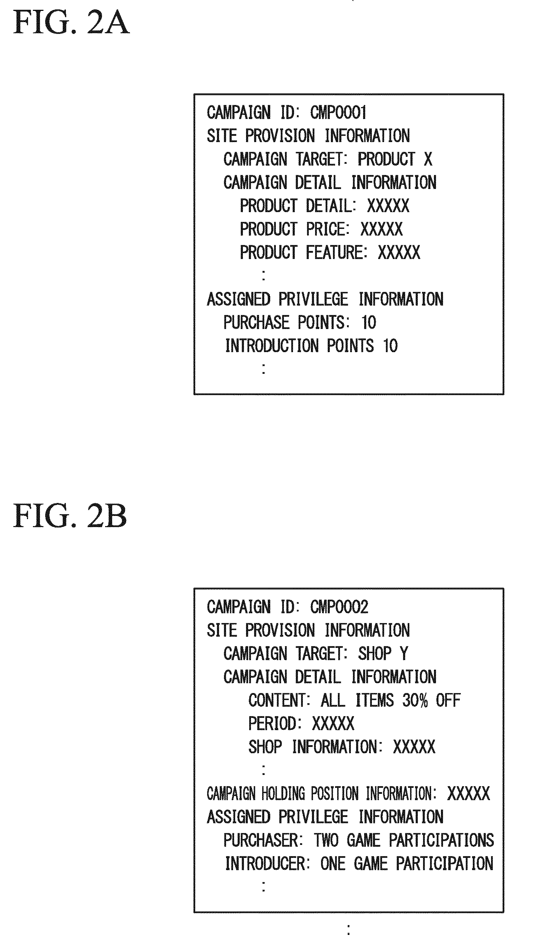

Fig. 2A is a diagram illustrating a first setting example of campaign information stored in the storage unit 12 of the sales promotion device 1. Fig. 2B is a diagram illustrating a second setting example of campaign information stored in the storage unit 12 of the sales promotion device 1. As illustrated in Figs. 2A and 2B, a campaign ID, a campaign target, site provision information, assigned privilege information, etc. are included in the campaign information.

The site provision information is information to be distributed to the terminal device 2 of the user, and represents description content of the campaign of which the user is notified. For example, when the campaign target is a product, detailed description of the product, a price of the product, a feature of the product, etc. are included in the site provision information. In addition, for example, when the campaign target is a shop, a shopping district, or the like, information of campaign content such as "all items 30% off," a period, and each shop of a shopping district is included in the site provision information. In addition, when the campaign target is a manufacturer, a campaign target product, an application qualification, prize content, etc. are included in the site provision information.

The assigned privilege information represents privilege content assigned to the introducer or the introduced person. For example, the privilege content represents purchase points which are points assigned to the introducer or the introduced person actually purchasing the product and introduction points which are points assigned to the introducer when the introduced person has purchased the product.

In addition, when the campaign target is a shop, a shopping district, or the like, campaign holding position information representing a position of the shop or the shopping district is further included in the campaign information.

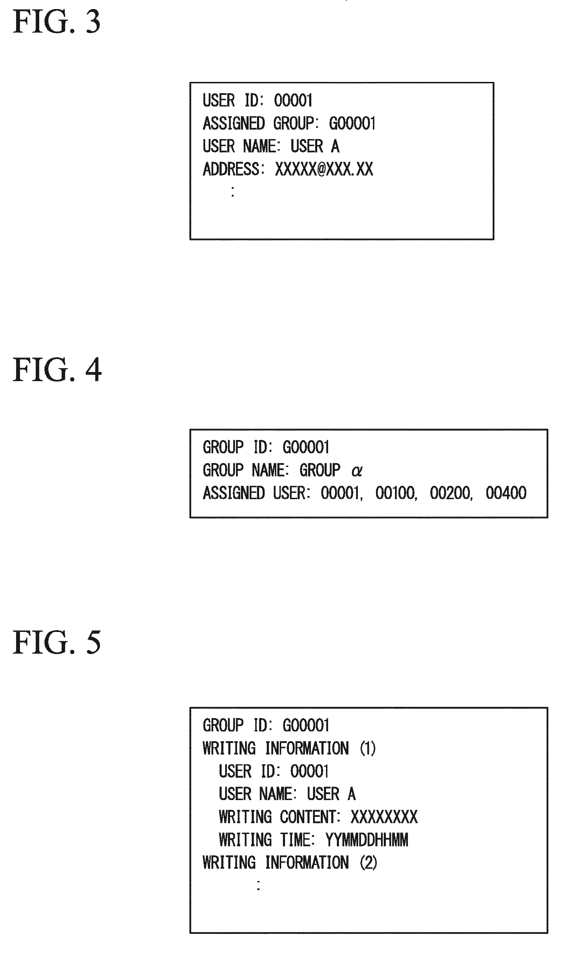

Fig. 3 is a diagram illustrating a setting example of user information stored in the storage unit 12 of the sales promotion device 1. As illustrated in Fig. 3, information of a user ID, a user name, an assigned group of a user, an address, or the like for specifying a user in the SNS is included in user information. The assigned group of the user is represented by the group ID which is information for specifying the group in the SNS. Also, when a plurality of assigned groups are set in the assigned group of the user, the initially set assigned group becomes a default group. In the address information, for example, an electronic mail address is set.

Fig. 4 is a diagram illustrating a setting example of group information stored in the storage unit 12 of the sales promotion device 1.

As illustrated in Fig. 4, information of a group ID, a group name, an assigned user, or the like is included in the group information. The assigned user is represented by the user ID.

Fig. 5 is a diagram illustrating a setting example of group writing information stored in the storage unit 12 of the sales promotion device 1. As illustrated in Fig. 5, a group ID, writing information of a group, etc. are included in group writing information. The writing information includes a user ID and a user name of a user performing writing, writing content, a writing time, etc.

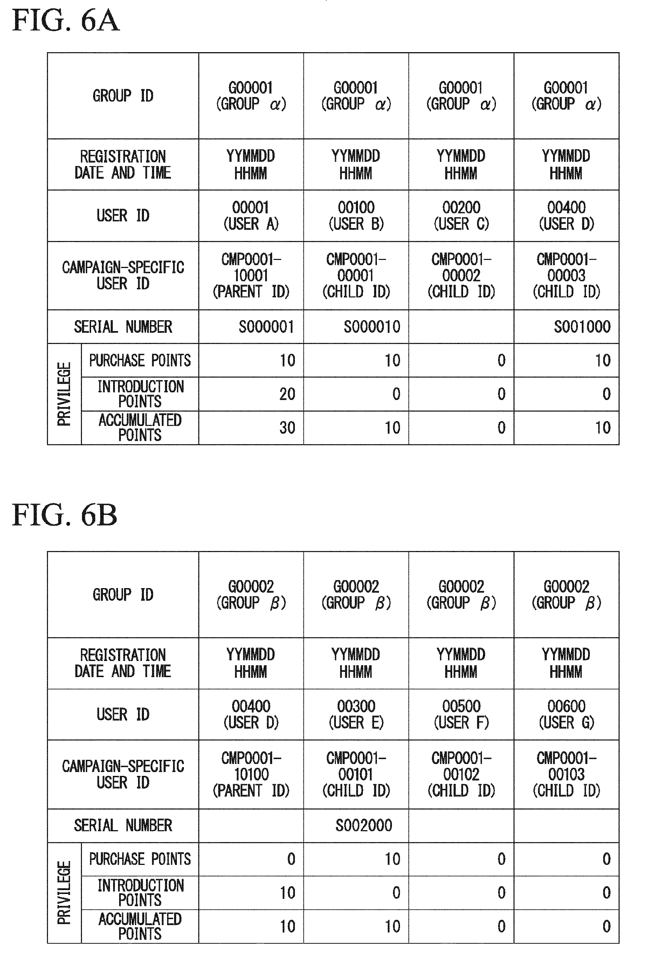

Fig. 6A is a diagram illustrating a first setting example of campaign participation information stored in the storage unit 12 of the sales promotion device 1. Fig. 6B is a diagram illustrating a second setting example of campaign participation information stored in the storage unit 12 of the sales promotion device 1. As illustrated in Figs. 6A and 6B, the campaign participation information includes information obtained by associating a user ID, an ID of a group to which a user belongs, a registration date and time for campaign participation information, a campaign-specific user ID, a serial number used in campaign participation registration, and privilege information. A parent ID or a child ID is set in the campaign-specific user ID. In addition, in Figs. 6A and 6B, purchase points, introduction points, and accumulated points which are a sum of the purchase points and the introduction points are illustrated as privilege information.

Also, in the first embodiment, the parent ID and the child ID partially include a campaign ID. That is, the parent ID and the child ID include a campaign ID and a user-specific unique ID. Identification information of the parent ID or the child ID is included in the unique ID or ranges used in the parent ID and the child ID are different. In the case of a parent ID "CMP0001-10001" of user A illustrated in Figs. 6A and 6B, a part of "CMP0001" represents a campaign ID, and "10001" after the hyphen represents a unique ID. The unique ID represents the parent ID if the first digit of the unique ID is "1," and represents the child ID if the first digit of the unique ID is "0."

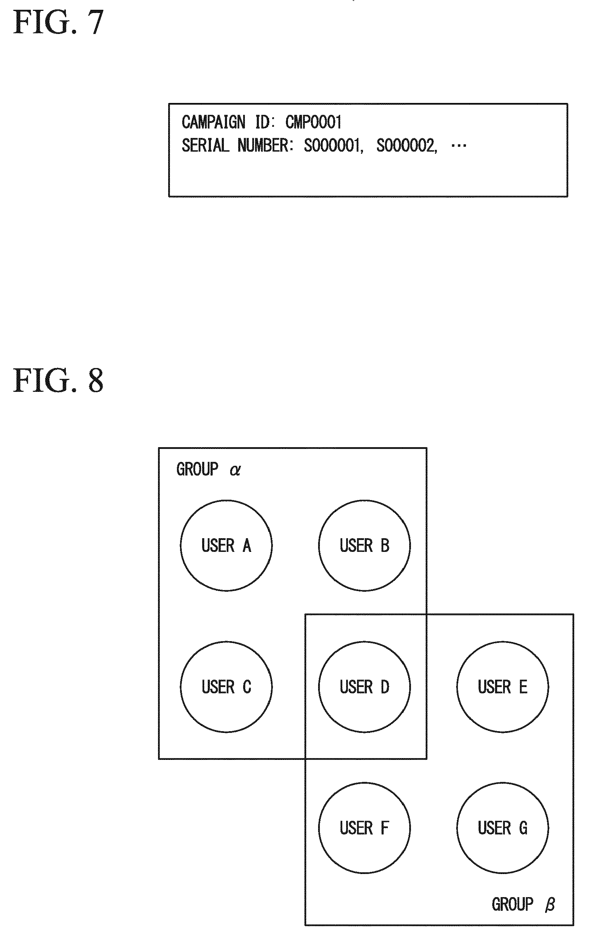

Fig. 7 is a diagram illustrating a setting example of used serial number information stored in the storage unit 12 of the sales promotion device 1. As illustrated in Fig. 7, the used serial number information represents information obtained by associating a campaign ID and a serial number used in participation registration for a campaign specified by the campaign ID.

Fig. 8 is a diagram illustrating a relationship between a group of an SNS and a user. As illustrated in Fig. 8, in the first embodiment, users A, B, C, and D belong to group α, and users D, E, F, and G belong to group β. In this manner, the user can belong to a plurality of groups.

Next, a process of the sales promotion system of the first embodiment will be described.

Also, although transmission and reception of data via the network 9 are performed via the communication unit 11 of the sales promotion device 1 and the communication unit 21 of the terminal device 2, description thereof is omitted hereinafter.

First, a communication site providing process of the SNS of the sales promotion device/system will be described.

The processing unit 23 of the terminal device 2 instructs the communication unit 21 to access the communication site of the SNS of the sales promotion device 1 according to an instruction input by the user through the input unit 22. The communication unit 21 of the terminal device 2 accesses the communication site of the SNS and transmits the user ID input through the input unit 22. Here, an example in which the terminal device 2a of user A accesses the communication site will be described.

The networking site providing unit 131 of the sales promotion device 1 specifies the user information stored in the storage unit 12 according to a user ID "00001" received from the terminal device 2a. Then, the networking site providing unit 131 reads a user name "user A" and a group ID "G00001" of an assigned group (a default group ID when a plurality of group IDs are set). Also, the group ID may be received from the terminal device 2. The networking site providing unit 131 specifies group writing information stored in the storage unit 12 according to the read group ID (or the group ID received from the terminal device 2), and reads the writing information. The networking site providing unit 131 generates SNS screen data for displaying the read writing information and a field on which writing is performed and transmits the generated SNS screen data to the terminal device 2a. The processing unit 23 of the terminal device 2a causes the display unit 24 to display the received SNS screen data.

Upon receiving writing content written to the writing field from the terminal device 2a of user A, the networking site providing unit 131 of the sales promotion device 1 updates writing information by adding the writing information in which the received writing content, the user ID, the user name, and the writing time are set to the group writing information. Further, the networking site providing unit 131 generates the SNS screen data for displaying the updated writing information and displaying a field on which writing is performed. Then, the networking site providing unit 131 transmits the generated SNS screen data to the terminal device 2a of user A transmitting the writing content and the terminal devices 2b, 2c, and 2d of other users B, C, and D currently connected to a communication site of group α specified by the group ID "G00001." The processing units 23 of the terminal devices 2a, 2b, 2c, and 2d cause the display units 24 to display the received SNS screen data.

In addition, the user can distribute a message to members of an assigned group. For example, when user A inputs a distribution message and a message distribution instruction through the input unit 22 of the terminal device 2a, the processing unit 23 transmits the input distribution message and the input message distribution instruction to the sales promotion device 1. The distribution unit 135 of the sales promotion device 1 specifies group information stored in the storage unit 12 according to the group ID "G00001" read from the user information specified by the user ID "00001." Then, the distribution unit 135 reads users IDs of users B, C, and D from the assigned user.

The distribution unit 135 specifies user information stored in the storage unit 12 according to the user IDs of users B, C, and D, and reads address information. The networking site providing unit 131 transmits a distribution message using the read address information as a destination. The processing units 23 of the terminal devices 2b, 2c, and 2d of users B, C, and D cause the display units 24 to display the received distribution message.

Next, the campaign information providing process will be described.

When the user searches for the campaign information, the processing unit 23 of the terminal device 2 instructs the communication unit 21 to access the campaign site of the SNS according to the instruction input by the user through the input unit 22. Thereby, the communication unit 21 of the terminal device 2 accesses the campaign site of the sales promotion device 1. The campaign information providing unit 132 of the sales promotion device 1 transmits screen data for providing information about a currently provided campaign and a campaign to be executed therefrom to the terminal device 2. The processing unit 23 of the terminal device 2a causes the display unit 24 to display the received screen data.

When the user inputs search information through the input unit 22 of the terminal device 2, the processing unit 23 transmits the input search information to the sales promotion device 1. The campaign information providing unit 132 of the sales promotion device 1 searches for the campaign information stored in the storage unit 12 according to search information received from the terminal device 2 of the user. The campaign information providing unit 132 generates screen data for displaying site provision information read from the campaign information specified as a search result, and returns the generated screen data to the terminal device 2 of the user. The processing unit 23 of the terminal device 2 causes the display unit 24 to display the received screen data.

According to the above description, the user can view all campaign information using the campaign site. Thus, it is possible to easily search for product sales promotion information or information about the campaign without having to search for an individual manufacturer homepage.

In addition, it is possible to push-distribute the campaign information from the sales promotion device 1. When the terminal device 2 of the user is a mobile phone terminal or a portable computer device, the processing unit 23 periodically transmits position information representing a current position acquired by the position acquiring unit 27 and a user ID to the sales promotion device 1.

The campaign information providing unit 132 of the sales promotion device 1 specifies campaign information including a current position represented by the position information received from the terminal device 2 and campaign holding position information representing a position within a predetermined distance among the campaign information stored in the storage unit 12. The campaign information providing unit 132 specifies the user information stored in the storage unit 12 according to the received user ID and reads address information. The campaign information providing unit 132 generates electronic mail for displaying the site provision information read from the specified campaign information, and transmits the generated electronic mail to the terminal device 2 of the user by setting an electronic mail address represented by the read address information as a destination. The processing unit 23 of the terminal device 2 causes the display unit 24 to display the received electronic mail.

According to the above description, it is possible to distribute information of a campaign from the sales promotion device 1 to the terminal device 2 of the user when the user registered in the SNS passes near a shop or a shopping district from which campaign information is provided by the sales promotion device 1. In addition, the campaign information providing unit 132 of the sales promotion device 1 includes and transmits a URL of the online shopping site provided by the shop or the shopping district in information to be distributed. Thereby, the user can log in to the shopping site using the URL, and purchase a product. In addition, because a product can also be purchased in an actual shop, sales promotion is improved.

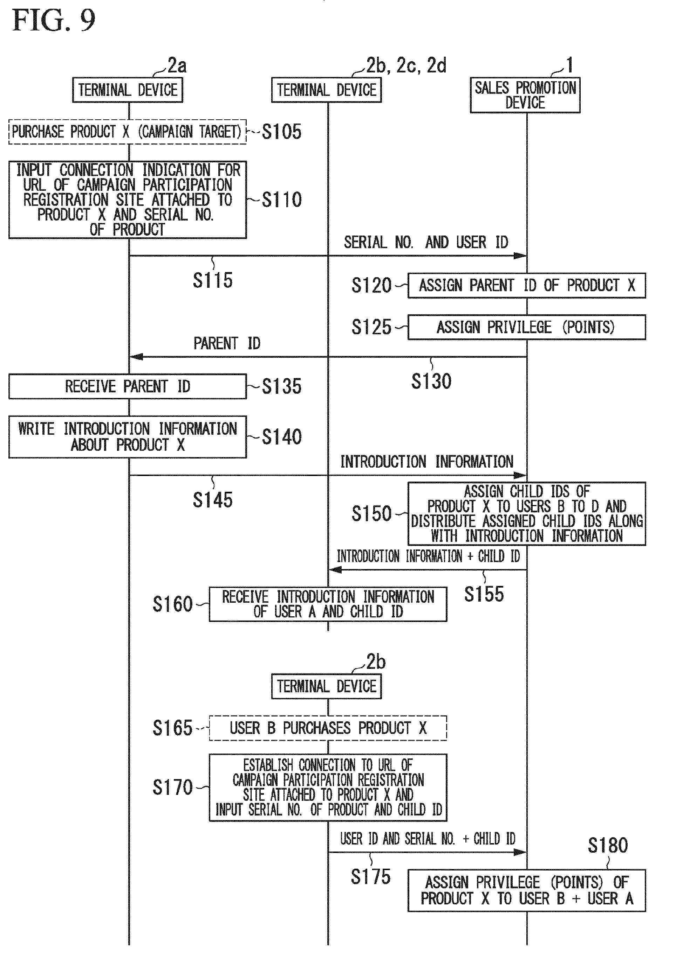

Fig. 9 is a sequence diagram of a campaign participation registration process in the sales promotion system. The case in which the terminal device 2a is used by user A and the terminal devices 2b, 2c, and 2d are used by users B, C, and D, respectively, will be described with reference to Fig. 9.

Here, the case in which user A has purchased product X which is a campaign target will be described.

When purchasing product X (step S105), user A reads a two-dimensional barcode attached to product X through the reading unit 25 of the terminal device 2a (step S110). The processing unit 23 acquires a URL of a campaign participation registration site of product X and a serial number unique to each campaign target (product X) from the two-dimensional barcode read by the reading unit 25. When user A inputs an access instruction and a user ID through the input unit 122, the communication unit 21 accesses the sales promotion device 1 using the URL acquired by the processing unit 23 as the destination. In addition, the processing unit 23 transmits the serial number and the user ID to the sales promotion device 1 (step S115). Also, the serial number may be part of the URL or a parameter added to the URL.

The sales promotion device 1 specifies the campaign from the URL used in access from the terminal device 2. The sales promotion device 1 assigns a parent ID of the campaign of product X to user A (step S120), and assigns a privilege such as points (step S125). The sales promotion device 1 notifies the terminal device 2a of user A of the assigned parent ID (step S130). The processing unit 23a of the terminal device 2a writes the received parent ID to the storage unit 26 (step S135).

Through the input unit 22 of the terminal device 2, user A (introducer) writes introduction information such as impressions or recommendation text about product X for members (introduced persons) registered in the SNS, and inputs a distribution instruction (step S140). The processing unit 23 of the terminal device 2 transmits the instruction information and the distribution instruction to the sales promotion device 1 (step S145). The sales promotion device 1 assigns child IDs associated with the parent ID to users B, C, and D, who are other members of a group to which user A belongs (step S150). The sales promotion device 1 distributes the child IDs assigned to the users and the introduction information received from the terminal device 2a to the terminal devices 2b, 2b, and 2d of users B, C, and D (step S155). The processing units 23 of the terminal devices 2b, 2c, and 2d of users B, C, and D cause the display units 24 to display the instruction information and the child IDs (step S160).

Upon purchasing product X introduced from user A (step S165), user B who is one of introduced persons reads a two-dimensional barcode attached to product X through the reading unit 25 of the terminal device 2b (step S170). The processing unit 23 acquires the URL of the campaign participation site of product X and the unique serial number from the two-dimensional barcode read by the reading unit 25. User B inputs the user ID, the child ID, and the access instruction through the input unit 22. The communication unit 21 accesses the sales promotion device 1 using the URL acquired by the processing unit 23, and the processing unit 23 transmits the serial number, the user ID, and the child ID to the sales promotion device 1 (step S175). The sales promotion device 1 assigns a privilege such as points to user B (introduced person) of the received child ID and also assigns an additional privilege such as points to user A (introducer) of the parent ID associated with the child ID (step S180).

As described above, a first purchaser of the group introduces product or campaign information to a friend and points are assigned to the introducer every time the introduced person purchases the product.

Then, for example, user D who is an introduced person introduces product or campaign information by transmitting introduction information to friends belonging to group β such as users E, F, and G. Then, when any one of users E, F, and G who are the next introduced persons purchases a product and performs registration in a campaign, points are assigned to user D introducing campaign information to group β. In addition, when any one of users E, F, and G who are the introduced persons purchases a product and performs registration in the campaign, a setting in which points are assigned to user A who is the first introducer may be made. In addition, when any one of users E, F, and G who are the introduced persons purchases a product and performs registration in the campaign, points may be assigned and set for both users A and D.

In this manner, because a process in which the introducer introduces a product or the like to the introduced person, the introduced person further purchases a product and performs registration in the campaign, and points are assigned to the introducer is iterated, the effect of product sales is improved to be greater than or equal to that of normal word of mouth.

Also, in the above description, the terminal device 2 reads a two-dimensional barcode through the reading unit 25 and acquires a URL of a campaign participation registration site and a serial number from the two-dimensional barcode. However, when this information is assigned to a product or receipt in character information, the user may input the information through the input unit 22 or the reading unit 25 may read the character information.

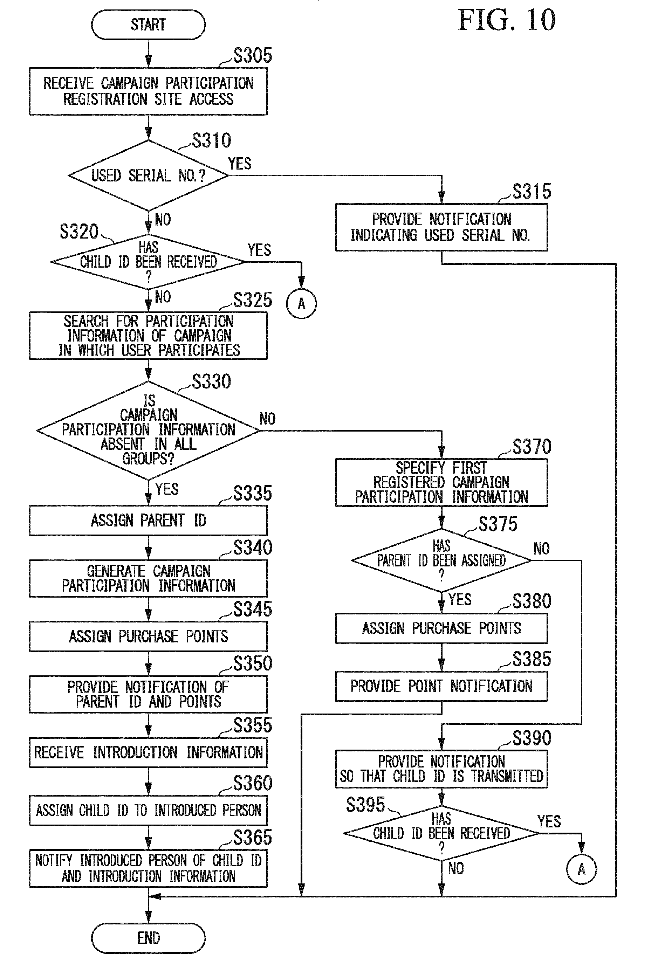

Fig. 10 is a diagram illustrating a campaign participation registration processing flow of the sales promotion device 1.

The terminal device 2 performs the process of steps S110 to S 115 of Fig. 9 or the process of steps S170 to S175. The communication unit 11 of the sales promotion device 1 is accessed using the URL of the campaign participation registration site from the terminal device 2, and receives a serial number and a user ID or receives a serial number, a user ID, and a child ID (step S305).

The new registration unit 133 of the sales promotion device 1 specifies a campaign based on the URL used in the access. The new registration unit 133 specifies used serial number information stored in the storage unit 12 according to a campaign ID of the specified campaign, and determines whether the received serial number is registered (step S310). Upon determining that the received serial number is registered (step S310: YES), the new registration unit 133 creates a notification message indicating that the received serial number is a used serial number and transmits the created notification message to the terminal device 2 (step S315). After the transmission of the message, the processing unit 13 ends the process. The processing unit 23 of the terminal device 2 causes the display unit 24 to display the message indicating that the received serial number is the used serial number.

On the other hand, upon determining that the received serial number is not registered in the specified used serial number information (step S310: NO), the new registration unit 133 determines whether the child ID has been received from the terminal device 2 (step S320). Upon determining that the child ID is not received (step S320: NO), the new registration unit 133 searches for the campaign participation information stored in the storage unit 12 using the campaign ID and the received user ID as a key (step S330).

When the search result indicates that the campaign participation information has not been found (step S330: YES), the new registration unit 133 assigns the parent ID including the campaign ID and a unique number of a parent to the user (step S335). Then, the new registration unit 133 generates new campaign participation information and writes the generated new campaign participation information to the storage unit 12 (step S340). Specifically, the new registration unit 133 specifies the user information stored in the storage unit 12 according to the received user ID and reads a group ID. The new registration unit 133 associates and writes the group ID, a registration date and time representing a current time, the received user ID, the assigned parent ID, and the received serial number with the new campaign participation information.

Subsequently, the new registration unit 133 specifies the campaign information stored in the storage unit 12 according to the campaign ID, and reads the number of purchase points from assigned privilege information. The new registration unit 133 sets the privilege information in association with the parent ID in the new campaign information generated in step S340 (step S345). The privilege information represents the read purchase points, introduction points of "0" points, and accumulated points of a sum of the purchase points and the introduction points. The new registration unit 133 notifies the terminal device 2 of the user of content of a current privilege represented by the privilege information corresponding to the parent ID, that is, the number of purchase points, the number of introduction points, and the number of accumulated points (step S350). The processing unit 23 of the terminal device 2 causes the display unit 24 to display the received privilege content.

At this time, a notification may be provided by including the parent ID or the current privilege content in screen data of the SNS generated by the networking site providing unit 131. Specifically, the new registration unit 133 notifies the networking site providing unit 131 of the parent ID and the current privilege content. The networking site providing unit 131 performs a process similar to the above-described communication site providing process. In addition to this, the parent ID and the current privilege content of the notification from the new registration unit 133, a screen transition button for displaying a page on which the introduction information is written, etc. are further included in the SNS screen data transmitted to the terminal device 2 of an access source (introducer).

Next, the terminal device 2 transmits the introduction information addressed to the member of the group of the SNS to the sales promotion device 1 (steps S140 to S145 of Fig. 9). For example, when the screen transition button of the SNS screen data displayed by the display unit 24 is pressed through the input unit 22 of the terminal device 2, the processing unit 23 transmits a transmission request of the introduction information writing screen to the sales promotion device 1. The introduced person registration unit 134 of the sales promotion device 1 transmits introduction information writing screen data including an introduction information writing field and an introduction transmission button to the terminal device 2. When the introduction information is input to the introduction information writing field of the introduction information writing screen data displayed by the display unit 24 through the input unit 22 of the terminal device 2 and the introduction transmission button is pressed, the processing unit 23 transmits the written introduction information to the sales promotion device 1.

Upon receiving the introduction information from the terminal device 2 (step S355), the introduced person registration unit 134 of the sales promotion device 1 acquires the group ID from the campaign participation information newly generated in step S340. Then, the introduced person registration unit 134 reads a user ID of another user from the group information specified according to the group ID. The new registration unit 133 searches for other campaign participation information stored in the storage unit 12 using each of the campaign ID and the read user ID of the other user as the key. The new registration unit 133 specifies another user ID as the introduced person by excluding user IDs set in the other campaign participation information found from the search result among the other read user IDs.

According to the above-described process, the same user is prevented from being the introduced person for a plurality of introducers. For example, when user A has already participated in the campaign, users B, C, and D of group α to which user A belongs are registered in the campaign participation information. Thereafter, user E is assumed to have newly participated in the campaign. It is difficult for user D to be an introduced person for user E because, even though users D, F, and G also participate in group β to which user E belongs, user D is already the introduced person for user A.

The introduced person registration unit 134 assigns the child ID including the campaign ID and the unique number of the child to the specified introduced person. The introduced person registration unit 134 associates and writes the user ID of the introduced person, the child ID assigned to the introduced person, the group ID of the group to which the introduced person belongs, and a registration date and time with the campaign participation information (step S360).

The distribution unit 135 specifies the user information stored in the storage unit 12 according to the user ID of the introduced person to which the child ID is assigned, and reads address information. The distribution unit 135 provides a notification of the child ID and the introduction information using an address of the introduced person as the destination (step S365). For example, the distribution unit 135 provides a notification of the child ID and the introduction information assigned to the introduced person through electronic mail using an electronic mail address represented by the address information as the destination. After the notification, the processing unit 13 ends the process. The processing unit 23 of the terminal device 2 of the introduced person causes the display unit 24 to display the received child ID and introduction information.

On the other hand, when the campaign participation information has been found in step S330, the new registration unit 133 selects campaign participation information of an oldest registration date and time set in association with the user ID received from the terminal device 2 among the found campaign participation information (step S370). The new registration unit 133 determines whether the parent ID is registered in association with the user ID received from the terminal device 2 in the selected campaign participation information (step S375). When the parent ID is registered, the sales promotion device 1 assigns purchase points to the introducer because the user of the access source is the introducer and is shown to participate in the campaign by purchasing a campaign target product again. On the other hand, when the child ID is registered, an operation is performed to urge to transmit the child ID because the user of the access source is the introduced person (however, the user may also be the introducer for a member of another group after serving as the introduced person) and is shown to perform campaign participation registration without transmitting the child ID.

When it is determined that the parent ID is registered (step S375: YES), the new registration unit 133 specifies the campaign information stored in the storage unit 12 according to the campaign ID and reads the number of purchase points from the assigned privilege information. The new registration unit 133 updates each of the number of purchase points and the number of accumulated points of the privilege information set by associating the selected campaign participation information with the parent ID to the number of points obtained by adding the number of purchase points read from the assigned privilege information (step S380). The new registration unit 133 notifies the terminal device 2 of the user of current privilege content represented by privilege information corresponding to the parent ID, that is, the number of purchase points, the number of introduction points, and the number of accumulated points after the update, and the processing unit 13 ends the process (step S385). The processing unit 23 of the terminal device 2 causes the display unit 24 to display the received privilege content. In addition, although the purchase points are assigned and set as the privilege information as described above, a privilege such as a prize may be assigned.

At this time, a notification may be provided by including the current privilege content in screen data of the SNS generated by the networking site providing unit 131. Specifically, the new registration unit 133 notifies the networking site providing unit 131 of the current privilege content. Although the networking site providing unit 131 performs a process similar to the above-described communication site providing process, the current privilege content of the notification from the new registration unit 133 is further included in the SNS screen data transmitted to the terminal device 2 of an access source (introducer).

When it is determined that the parent ID is not registered in step S375 (step S375: NO), the new registration unit 133 notifies the terminal device 2 of the user of a message for urging to transmit the child ID (step S390). For example, screen data including a message for urging to transmit the child ID, a field in which the child ID is set, and a transmission button is transmitted to the terminal device 2. The processing unit 23 of the terminal device 2 causes the display unit 24 to display the screen data received from the sales promotion device 1. When the terminal device 2 has not transmitted the child ID and the new registration unit 133 has not received the child ID (step S395: NO), the processing unit 13 ends the process.

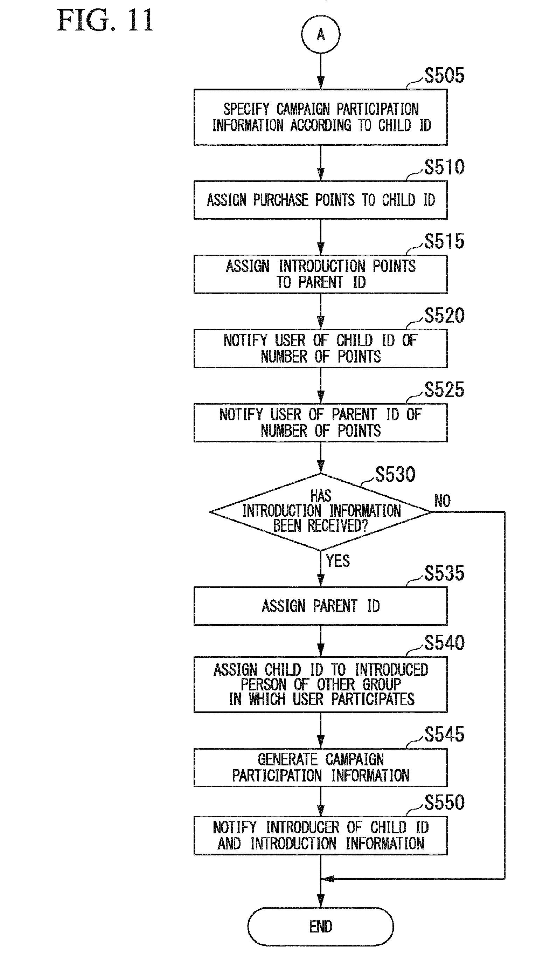

When the child ID is input through the input unit 22 of the terminal device 2 and the transmission button is pressed, the processing unit 23 transmits the input child ID. When the new registration unit 133 of the sales promotion device 1 has received the child ID (step S395: YES) or determines that the child ID has been received from the terminal device 2 in step S320 (step S320: YES), the processing unit 13 performs the process illustrated in Fig. 11.

Fig. 11 is a diagram illustrating a campaign participation registration processing flow subsequent to Fig. 10.

When the new registration unit 133 determines that the result is YES in step S395, the privilege update unit 136 specifies the campaign participation information stored in the storage unit 12 according to the child ID received from the terminal device 2 (step S505). In addition, when it is determined that the result is YES in step S320, the privilege update unit 136 specifies the campaign participation information stored in the storage unit 12 according to the child ID received from the terminal device 2 (step S505).

The privilege update unit 136 specifies the campaign information stored in the storage unit 12 according to the campaign ID, and reads the number of purchase points and the number of introduction points from the assigned privilege information. The privilege update unit 136 updates each of the number of purchase points and the number of accumulated points of the privilege information set by associating the specified campaign participation information with the received child ID to the number of points obtained by adding the number of purchase points read from the assigned privilege information (step S510). Further, the privilege update unit 136 updates each of the number of purchase points and the number of accumulated points of the privilege information set by associating the specified campaign participation information with a parent ID to the number of points obtained by adding the number of introduction points read from the assigned privilege information (step S515).

The privilege update unit 136 notifies the terminal device 2 of the introduced person, which is the access source, of content of the privilege information updated in step S510, that is, notifies the terminal device 2 of the access source of the purchase points, the introduction points, and the accumulated points (step S520). The processing unit 23 of the terminal device 2 of the access source causes the display unit 24 to display the received privilege content.

At this time, a notification may be provided by including the current privilege content in screen data of the SNS generated by the networking site providing unit 131. Specifically, the new registration unit 133 notifies the networking site providing unit 131 of the current privilege content of the introduced person. The networking site providing unit 131 performs a process similar to the above-described communication site providing process. In addition to this, the current privilege content of the notification from the new registration unit 133, a screen transition button for displaying a page on which the introduction information is written, etc. are further included in the SNS screen data transmitted to the terminal device 2 of an access source (introduced person).

Further, the privilege update unit 136 specifies the user information stored in the storage unit 12 according to the parent ID of the specified campaign participation information and reads the address information. The privilege update unit 136 notifies the terminal device 2 of the user (introducer) specified by the parent ID of the content of the privilege information after the update, that is, the number of purchase points, the number of introduction points, and the number of accumulated points, using the read address information as the destination (step S525). Specifically, first, the privilege update unit 136 searches for the campaign participation information stored in the storage unit 12 according to the user ID and the campaign ID set in association with the parent ID of the specified campaign participation information. When the campaign participation information has not been found as the search result, this means that the introducer does not serve as an introduced person for another introducer. In this case, the privilege update unit 136 provides a notification of the content of the privilege information updated in step S515 as the privilege information after the update. On the other hand, when the campaign participation information has been found as the search result, this means that the introducer serves as an introduced person for another introducer. In this case, the privilege update unit 136 provides a notification of privilege information after the update obtained along with specific information set by associating the found campaign participation information with the user ID used in the search and the privilege information updated in step S515. For example, the privilege update unit 136 provides a notification of the privilege information after the update for the introducer through electronic mail using an electronic mail address represented by the address information as the destination. The processing unit 23 of the terminal device 2 of the introducer causes the display unit 24 to display the received privilege content.

Subsequently, the terminal device 2 of the access source (introduced person) transmits the introduction information addressed to the member registered in the communication site to the sales promotion device 1. For example, when the screen transition button of the SNS screen data displayed by the display unit 24 is pressed through the input unit 22 of the terminal device 2 of the access source (introduced person), the processing unit 23 transmits a transmission request of the introduction information writing screen to the sales promotion device 1. The introduced person registration unit 134 of the sales promotion device 1 transmits introduction information writing screen data including an introduction information writing field and an introduction transmission button to the terminal device 2. When the introduction information is input to the introduction information writing field of the introduction information writing screen data displayed by the display unit 24 through the input unit 22 of the terminal device 2 and the introduction transmission button is pressed, the processing unit 23 transmits the written introduction information to the sales promotion device 1.

When the introduced person registration unit 134 of the sales promotion device 1 receives the introduction information from the terminal device 2 (step S530: YES), the introduced person registration unit 134 assigns a parent ID including a campaign ID and a unique number of a parent to the user (introduced person) of the access source (step S535). Further, the introduced person registration unit 134 specifies user information stored in the storage unit 12 according to the user ID received from the terminal device 2 in step S305 of Fig. 10 and reads a group ID of a group to which the user belongs. The introduced person registration unit 134 extracts group IDs which are not included in the specified campaign participation information from among the read group IDs. The introduced person registration unit 134 specifies the group information stored in the storage unit 12 according to each of the extracted group IDs, and reads a user ID. The introduced person registration unit 134 searches for other campaign participation information stored in the storage unit 12 using each of the campaign ID and the read user ID as the key. The introduced person registration unit 134 specifies a user ID as that of a new introduced person by excluding user IDs set in the other campaign participation information among the other read user IDs. The introduced person registration unit 134 assigns a child ID including the campaign ID and a unique number of a child to the new introduced person of the specified user ID (step S540).

The introduced person registration unit 134 generates new campaign participation information and writes the generated new campaign participation information to the storage unit 12 (step S545). Specifically, the introduced person registration unit 134 writes the new campaign participation information to the storage unit 12. In the new campaign participation information, information in which the received user ID, the parent ID assigned in step S535, the group ID extracted in step S540, and a registration date and time representing a current date and time are associated is set. Further, the introduced person registration unit 134 associates and writes the user ID of the new introduced person, the child ID assigned to the new introduced person, the group ID of the group to which the new introduced person belongs, and the registration date and time with the written campaign participation information.

The distribution unit 135 specifies the user information stored in the storage unit 12 according to the user ID of the new introduced person to which the child ID is assigned in step S540, and reads address information. The introduced person registration unit 134 provides a notification of the child ID and the introduction information using the address information of the new introduced person as the destination (step S550). For example, the distribution unit 135 provides a notification of the child ID and the introduction information through electronic mail using an electronic mail address represented by the address information as the destination. After the notification, the processing unit 13 ends the process. The processing unit 23 of the terminal device 2 of another user (new introducer) to which the child ID is assigned causes the display unit 24 to display the received child ID and introduction information.

Also, when the introduced person registration unit 134 of the sales promotion device 1 does not receive the introduction information from the terminal device 2 (step S530: NO), the processing unit 13 ends the process.

Also, in step S365 of Fig. 10 or step S550 of Fig. 11, the sales promotion device 1 may further provide a notification of a URL of the campaign participation registration site. In addition, the child ID and the campaign URL may be transmitted as the two-dimensional barcode. Thereby, when the campaign is registered, the terminal device 2 of the introduced person can use the URL and the child ID represented by the two-dimensional barcode of the notification in the electronic mail. In addition, the child ID may be configured to be transmitted as a parameter of the URL.

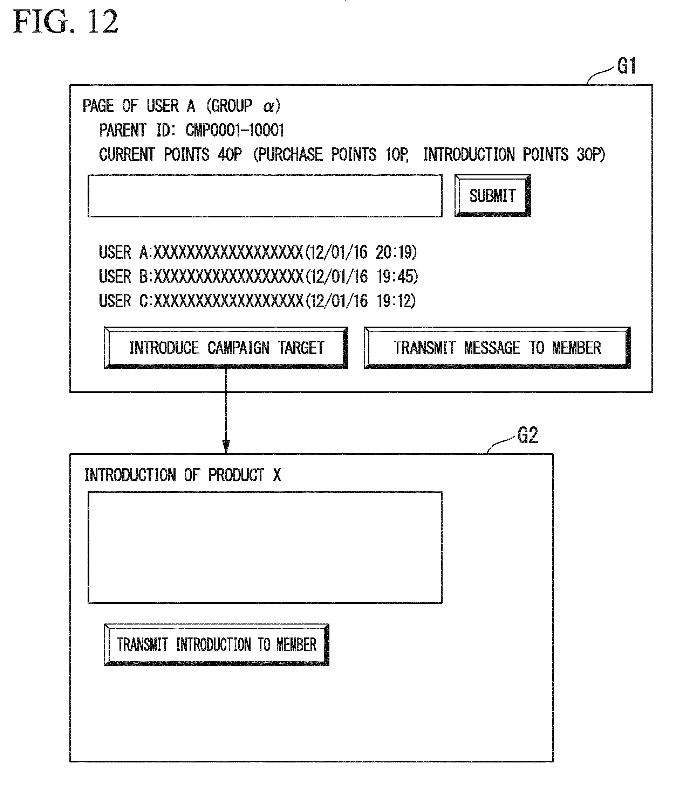

Fig. 12 is a diagram illustrating a display image of a screen displayed by the sales promotion device 1 on the terminal device 2 when the terminal device 2 of the introducer has had access using a URL of the campaign participation registration site.

For example, the terminal device 2a accesses the sales promotion device 1 using the URL of the campaign participation registration site and transmits a user ID of user A. Thereby, the processing unit 23 of the terminal device 2a causes the display unit 24 to display screen G1 according to SNS screen data returned from the sales promotion device 1. As illustrated in Fig. 12, on screen G1, content written by the user of group α to which user A belongs is displayed and a field for allowing user A to write is displayed. Further, on screen G1, a parent ID of user A, a currently assigned privilege, and a screen transition button for displaying a page on which the introduction of the campaign target is written are displayed.

When user A clicks the button through a mouse which is the input unit 22 of the terminal device 2a, the processing unit 23 transmits a notification indicating that the button has been clicked. Upon receiving the notification indicating that the button has been clicked, the introduced person registration unit 134 of the sales promotion device 1 transmits introduction information writing screen data of screen G2 including a field to which the introduction of the campaign target is written and an introduction transmission button to the terminal device 2a. According to the introduction information writing screen data returned from the sales promotion device 1, the terminal device 2a causes the display unit 24 to display screen G2. The user edits and transmits an introductory essay through screen G2.

Although the child ID is received from the terminal device 2 of the introduced person at the time of campaign participation registration of the introduced person in the first embodiment, the child ID may not be received. In this case, the new registration unit 133 of the sales promotion device 1 specifies campaign participation information stored in the storage unit 12 according to the campaign ID and the user ID in step S320 of Fig. 10. When campaign participation information has not been specified, the processing unit 13 performs the process from step S335 of Fig. 10. Then, when a parent ID is registered in association with a user ID in campaign participation information of an oldest registration date and time set in association with the user ID received from the terminal device 2 among the specified campaign participation information, the processing unit 13 performs the process from step S380 of Fig. 10. When a child ID is registered in association with the user ID in the campaign participation information of the oldest registration date and time set in association with the user ID received from the terminal device 2 among the specified campaign participation information, the processing unit 13 performs the process from step S510 of Fig. 11.

In addition, although the child ID is assigned to the introduced person when the introduction information has been received from the terminal device 2 in the first embodiment, the child ID may be assigned when the participation registration for the campaign has been received from the introduced person. In this case, the process when the child ID is not received from the terminal device 2 of the above-described introduced person is performed in step S320 of Fig. 10. However, when neither the child ID nor the parent ID is registered in association with the user ID in the campaign participation information of the oldest registration date and time set in association with the user ID received from the terminal device 2 among the campaign participation information specified according to the campaign ID and the user ID, the child ID is assigned to the user. This is because the user of the access source represents an introduced person still before the child ID is assigned. The processing unit 13 executes the process from step S510 after writing the child ID assigned in association with the received user ID to the campaign participation information of the oldest registration date and time described above. In step S515, the introduced person registration unit 134 of the sales promotion device 1 may provide a notification to the terminal device 2 along with the assigned child ID in step S515. In this case, the terminal device 2 may transmit the child ID of the notification when second or subsequent campaign participation registration is performed.

In addition, in step S360 of Fig. 10, only the user ID of the introduced person, the group ID of the group to which the introduced person belongs, and the registration date and time are associated and written in the campaign participation information without assigning the child ID. In step S365, a notification of the child ID is not provided.

In addition, in step S540 of Fig. 11, the child ID is not assigned. In step S545, new campaign participation information is generated. In step S550, a notification of the child ID is not provided. In the new campaign participation information, information obtained by associating the received user ID, the parent ID, the extracted group ID, and the registration date and time and information obtained by associating the user ID of the new introduced person, the group ID of the group to which the new introduced person belongs, and the registration date and time are set.

In addition, although one introducer for the introduced person is set in the first embodiment, a plurality of introducers may be set for the introduced person. In this case, in step S360 of Fig. 10, the new registration unit 133 acquires the group ID from the newly generated campaign participation information. Then, upon reading user IDs of other users from the group information specified according to the group ID, the new registration unit 133 specifies all the other read user IDs as introduced persons. Likewise, upon reading the user IDs of the other users from the group information specified according to the extracted group ID in step S540 of Fig. 11, the introduced person registration unit 134 specifies all the other read user IDs as new introduced persons. Then, when the introduced person purchases a campaign target product and participates in the campaign, the child ID is selected and transmitted. Thereby, introduction points are assigned to an introducer of a parent ID associated with the selected child ID.

In addition, when a new introduced person to which the introduced person has transmitted introduction information performs campaign registration, the privilege update unit 136 performs the following process in step S515 of Fig. 11 when introduction points are assigned to a first introducer. That is, the privilege update unit 136 searches for campaign participation information stored in the storage unit 12 according to the user ID and the campaign ID set by associating the specified campaign participation information with the parent ID.

The privilege update unit 136 further searches for the campaign participation information stored in the storage unit 12 according to the user ID and the campaign ID set by associating the campaign participation registration information found from the search result with the parent ID. This process is iterated until campaign participation information is not found.

The privilege update unit 136 updates each of the number of introduction points and the number of accumulated points of the privilege information set by associating the last found campaign participation information with the parent ID to the number of points obtained by adding the number of introduction points read from the assigned privilege information.

In addition, although an example in which the introduction information and the child ID are distributed to the terminal device 2 of the introduced person through the electronic mail has been described in the first embodiment, the introduction information and the child ID may be included in the SNS screen data to be transmitted to the terminal device 2 of the introduced person.

In addition, although the participation campaign-specific information is designated as a URL of a campaign participation site of an individual campaign in the first embodiment, the participation campaign-specific information may be a campaign ID. That is, a two-dimensional barcode attached to a product or a receipt represents a URL of a campaign participation registration site, a serial number, and a campaign ID. In this case, the URL of the campaign participation registration site may be common in the campaign. The processing unit 13 of the sales promotion device 1 uses the campaign ID received from the terminal device 2 in place of the campaign ID specified from the URL of the campaign participation registration site. In addition, the campaign ID may be included in the URL of the individual campaign registration site.

The case in which the campaign target is a product for sale in a shop, an online shopping site, or the like, a shop, a shopping district, or the like has been described above. However, the campaign target can be designated as an online shopping site on the Internet, a product for sale in the online shopping site, or the like. In this case, the terminal device 2 of the introducer or the introduced person performs online shopping by accessing a shopping server (not illustrated) connected on the network 9. When a payment process of the online shopping ends, the shopping server transmits a URL of the campaign participation registration site and a serial number to the terminal device 2 through a two-dimensional barcode. The terminal device 2 of the introducer or the introduced person acquires the URL and the serial number from the two-dimensional barcode received from the shopping server, and performs a similar process to that described above.

In addition, the campaign target can be designated as a member service of an enterprise, a shop, a shopping district, or the like. In this case, the sales promotion device 1 operates as follows.

The terminal device 2 of the user who is the introducer accesses the sales promotion device 1 using the URL of a member registration site as an access destination and transmits a user ID. The member registration site providing unit 137 of the sales promotion device 1 transmits a member registration site screen including a field to which member registration information which is information necessary for member registration is input and a transmission button to the terminal device 2. The introducer inputs the member registration information to the member registration site screen displayed by the processing unit 23 of the terminal device 2 on the display unit 24 through the input unit 22, and presses the transmission button. Thereby, the processing unit 23 transmits the input member registration information to the sales promotion device 1.

The member registration site providing unit 137 of the sales promotion device 1 assigns a member number to the introducer, associates the user ID, the assigned member number, and the member registration information received from the terminal device 2, and writes an association result to the storage unit 12. Further, the member registration site providing unit 137 notifies the new registration unit 133 of the user ID, the assigned member number, and the campaign ID of the campaign in which the member service the introducer has joined is designated as the campaign target. Thereby, the sales promotion device 1 performs the process from step S335 of Fig. 10. Then, in step S350, the new registration unit 133 of the sales promotion device 1 further provides a notification of the assigned member number. In addition, in step S365, the distribution unit 135 of the sales promotion device 1 provides a notification of a URL of a member registration site along with the child ID and the introduction information.

When reading an introductory essay and determining to perform member registration, the introduced person accesses the sales promotion device 1 from the terminal device 2 using the URL of the member registration site of the notification and transmits his/her own user ID and a child ID. The member registration site providing unit 137 of the sales promotion device 1 transmits a member registration site screen to the terminal device 2. The processing unit 23 of the terminal device 2 of the introduced person transmits the member registration information input by the introduced person through the input unit 22 to the member registration site screen displayed on the display unit 24 to the sales promotion device 1.

The member registration site providing unit 137 of the sales promotion device 1 assigns a member number to the introduced person, associates the user ID, the assigned member number, and the member registration information received from the terminal device 2, and writes an association result to the storage unit 12. Further, the member registration site providing unit 137 notifies the privilege update unit 136 of the user ID, the child ID, the assigned member number, and the campaign ID of the campaign in which a member service the introduced person has joined serves as a campaign target. Thereby, the sales promotion device 1 performs the process from step S505 of Fig. 11. Then, in step S520, the privilege update unit 136 of the sales promotion device 1 further provides a notification of the assigned member number. In addition, in step S550, the distribution unit 135 of the sales promotion device 1 provides a notification of a URL of a member registration site along with the child ID and the introduction information.

In this case, a process in which the user has performed member registration can be considered to be campaign participation. That is, the participation campaign-specific information can be designated as the URL of the member registration site.

As described above, the campaign target can be designated as joining the member service of an enterprise on a webpage. Thereby, when member registration of a network service or the like is sought and a friend introduced through an existing member becomes a new member, a privilege associated with joining is provided to the member of the introducer as well as the joining member. Accordingly, the campaign can be used as a tool for urging to join.

In addition, the campaign target can be set to be an online shopping service provided by the sales promotion device 1. In this case, the sales promotion device 1 operates as follows.

The terminal device 2 of the user who is an introducer accesses the sales promotion device 1 using the URL of the online shopping site as the access destination and transmits the user ID. The shopping site providing unit 138 of the sales promotion device 1 transmits information of a product to the terminal device 2. The processing unit 23 of the terminal device 2 of the introducer causes the display unit 24 to display the product information received from the sales promotion device 1. When purchasing the product, the introducer inputs order information including a product to be purchased, the number of pieces to be purchased, a payment method, etc. and a transmission instruction through the input unit 22. Thereby, the processing unit 23 transmits the input order information to the sales promotion device 1.

When payment is made based on the order information received from the terminal device 2 of the introducer, the shopping site providing unit 138 of the sales promotion device 1 performs the following process. That is, the shopping site providing unit 138 notifies the new registration unit 133 of a user ID, an assigned serial number, and a campaign ID of a campaign in which a product purchased by the user, a selling source of the product, or the like serves as the campaign target.

Thereby, the sales promotion device 1 performs the process from step S305 of Fig. 10. Then, in step S350, the new registration unit 133 of the sales promotion device 1 further provides a payment completion notification. In addition, in step S365, the distribution unit 135 of the sales promotion device 1 provides a notification of a URL of an online shopping site along with a child ID and introduction information.

When reading an introductory essay and determining to purchase a product, the introduced person accesses the sales promotion device 1 from the terminal device 2 using the URL of the online shopping site of the notification and transmits his/her own user ID and a child ID. The shopping site providing unit 138 of the sales promotion device 1 transmits product information to the terminal device 2, and the processing unit 23 of the terminal device 2 of the introduced person transmits the order information input through the input unit 22 to the sales promotion device 1.

When payment is made based on the order information received from the terminal device 2 of the introduced person, the shopping site providing unit 138 of the sales promotion device 1 performs the following process. That is, the shopping site providing unit 138 notifies the new registration unit 133 of a user ID, a child ID, an assigned serial number, and a campaign ID of a campaign in which a product purchased by the user, a selling source of the product, or the like serves as the campaign target.

Thereby, the sales promotion device 1 performs the process from step S305 of Fig. 10. Then, in step S520, the privilege update unit 136 of the sales promotion device 1 further provides a payment completion notification. In addition, in step S550, the distribution unit 135 of the sales promotion device 1 provides a notification of a URL of an online shopping site along with a child ID and introduction information.

In this manner, the sales promotion device 1 can specify the introducer or the introduced person according to a user ID of the SNS when the campaign target is designated as shopping in the online shopping site provided by the sales promotion device 1. Consequently, unlike when shopping is done in the online shopping site provided by the shopping server on the network 9, it is also unnecessary to transmit a URL and a serial number by a two-dimensional barcode or the like after a payment process. Accordingly, it is unnecessary for the introducer or the introduced person to access the campaign participation registration site again from the terminal device 2.

In addition, it is possible to provide a user with a coupon available in the purchase of a product of the campaign target or a shop of the campaign target from the sales promotion device 1. In this case, the sales promotion device 1 operates as follows.

The terminal device 2 of the introducer accesses the sales promotion device 1 according to the URL of the campaign site of the SNS and transmits the user ID and a distribution request for the used coupon to the sales promotion device 1. The campaign information providing unit 132 of the sales promotion device 1 transmits coupon information including the coupon requested through the received distribution request to the terminal device 2 of the introducer. In the coupon information, a two-dimensional barcode representing the URL of the campaign participation site and the serial number is included along with information of discount or service to be received by providing the coupon. The introducer prints coupon information received by the terminal device 2 on paper. In addition, the campaign information providing unit 132 writes an indication indicating that the coupon has been issued and a serial number of the coupon to the storage unit 12 in correspondence with the user ID of the introducer.

The introducer uses the coupon by handing over the coupon to a shop. A portable terminal or a personal computer of the shop or the terminal device 2 such as a terminal of a POS system reads the two-dimensional barcode printed on the coupon received from the introducer through the reading unit 25. Thereby, the processing unit 23 of the terminal device 2 of the shop acquires a campaign ID, a serial number, and a URL of a campaign participation registration site from the two-dimensional barcode read by the reading unit 25. Then, the processing unit 23 accesses the sales promotion device 1 using the URL as the destination and transmits the serial number.

The new registration unit 133 of the sales promotion device 1 reads the user ID from the storage unit 12 in correspondence with the received serial number. Then, the sales promotion device 1 performs the process from step S310 of Fig. 10. However, in step S320, the new registration unit 133 of the sales promotion device 1 performs the process from step S335 when the campaign participation information stored in the storage unit 12 has not been specified according to the campaign ID and the user ID.

In addition, in step S350, the new registration unit 133 performs the following process using an address read from the user information specified by the user ID as the destination. That is, the new registration unit 133 notifies the terminal device 2 of the introducer of current privilege content represented by privilege information of the introducer and a URL of an introduction information writing site corresponding to the campaign.

The introducer accesses the sales promotion device 1 using the URL of the introduction information writing site received by the terminal device 2 as the destination, and transmits introduction information. In addition, in step S355, the distribution unit 135 further provides a notification of the URL of the campaign site of the sales promotion device 1 from which the coupon can be downloaded, and does not provide the notification of a child ID.

Upon determining to use the shop by reading an introductory essay, the introduced person accesses the sales promotion device 1 from the terminal device 2 using the URL of the campaign site of the notification and transmits his/her own user ID and a distribution request for a coupon. The campaign information providing unit 132 of the sales promotion device 1 transmits coupon information including the coupon requested through the received distribution request to the terminal device 2 of the introducer. The introduced person prints the introduction information and the coupon information received by the terminal device 2 on paper. In addition, the campaign information providing unit 132 writes an indication indicating that the coupon has been issued and the serial number of the coupon to the storage unit 12 according to the user ID of the introduced person.

The introduced person uses the coupon by handing over the coupon to a shop. The terminal device 2 of the shop reads the two-dimensional barcode printed on the coupon received from the introduced person through the reading unit 25. Thereby, based on information obtained from the two-dimensional barcode read by the reading unit 25, the processing unit 23 of the terminal device 2 of the shop accesses the sales promotion device 1 using the URL of the campaign participation registration site as the destination and transmits the campaign ID and the serial number. Along with this, the processing unit 23 of the terminal device 2 of the shop transmits information of a use amount of service input through the input unit 22. The service use amount, for example, may be the number of people using the shop, an amount of money, or the number of product purchases. The new registration unit 133 of the sales promotion device 1 reads the user ID from the storage unit 12 in correspondence with the received serial number. Thereby, the sales promotion device 1 performs the process from step S310.

In step S320, the processing unit 13 of the sales promotion device 1 specifies the campaign participation information according to the campaign ID and the user ID. When the child ID is registered by associating the specified campaign participation information with the user ID, the processing unit 13 of the sales promotion device 1 performs the process from step S510 of Fig. 11. In addition, in step S515, the privilege update unit 136 of the sales promotion device 1 updates the privilege information set in association with the parent ID to a privilege of content in which a privilege is added according to a use amount of service. For example, the privilege update unit 136 calculates the number of assigned points by multiplying the number of introduction points read from the assigned privilege information by a coefficient according to the service use amount. Therefore, the privilege update unit 136 updates each of the number of purchase points and the number of accumulated points of the privilege information set by associating the campaign participation information with a parent ID to the number of points obtained by adding the number of introduction points.

In addition, in step S520, the introduced person registration unit 134 of the sales promotion device 1 notifies the terminal device 2 of the introduced person of current privilege content represented by privilege information of the introduced person and a URL of an introduction information writing site corresponding to the campaign. The introduced person accesses the sales promotion device 1 using the URL of the introduction information writing site received by the terminal device 2 as the destination, and transmits introduction information. In addition, in step S550, the distribution unit 135 further provides a notification of the URL of the campaign site of the sales promotion device 1 from which the coupon can be downloaded, and does not provide the notification of a child ID.

Also, the sales promotion device 1 may transmit coupon information together in step S365 of Fig. 10 and step S550 of Fig. 11. Thereby, the introduced person can save the effort and time of downloading the coupon from the sales promotion device 1.

The above, for example, is applicable to the following example.

The sales promotion device 1 provides campaign information of a shop such as a coupon discount in the SNS. For example, user A downloads a coupon of a restaurant from the sales promotion device 1, outputs the downloaded coupon on paper, and hands over the coupon when using the restaurant. In the restaurant, the terminal device 2 of the restaurant reads the two-dimensional barcode printed on the coupon. The terminal device 2 of the restaurant notifies the sales promotion device 1 of the fact that user A has used the coupon. The sales promotion device 1 confirms the use of the coupon by user A, and assigns the right to send an introduction card (introduction information) to a friend as a privilege for user A at that time.

User A introduces the fact that there is a benefit coupon at the restaurant, that service of the restaurant is good, or the like to a friend (user B, C, or D), and user B receiving the introduction card performs the following process. That is, user B downloads the coupon from the sales promotion device 1 and outputs the downloaded coupon on paper along with the introduction card.

When user B uses the restaurant along with a few friends and submits the introduction card along with the coupon, the two-dimensional barcode of the coupon is read by the terminal device 2 of the shop in the restaurant, and the sales promotion device 1 is notified of the number of people input through the input unit 22. Thereby, points for the number of people are assigned to user A, and the right to output the introduction card is also assigned to user B as a privilege. Thereafter, this is iterated.

In addition, when the campaign is executed without printing the two-dimensional barcode on the receipt or distributing campaign application paper on which the two-dimensional barcode is printed in the shop or the shopping district, the sales promotion device 1 operates as follows.

The terminal device 2 of the introducer accesses the sales promotion device 1 according to the URL of the campaign site of the SNS, and transmits the user ID and a distribution request for requesting the distribution of special sales information of a shop (or a shopping district) as the campaign information to the sales promotion device 1. The campaign information providing unit 132 of the sales promotion device 1 transmits the special sales information requested through the distribution request to the terminal device 2 of the introducer.

In the special sales information, a two-dimensional barcode representing user-specific information for specifying a user and a URL of a campaign participation registration site is included along with information about special sales to be executed by the shop (or shopping district). The user-specific information may be a serial number. The introducer prints the special sales information received by the terminal device 2 on paper. In addition, the campaign information providing unit 132 of the sales promotion device 1 writes distribution information obtained by associating the user ID of the introducer and the user-specific information to the storage unit 12.

The introducer hands over the paper on which the special sales information is printed to the shop at the time of accounting in the shop. The terminal device 2 such as a personal computer of the shop, a portable terminal, or a smartphone reads the two-dimensional barcode printed on the paper received from the introducer through the reading unit 25. The processing unit 23 of the terminal device 2 of the shop acquires the user-specific information and the URL of the campaign participation registration site from the two-dimensional barcode read by the reading unit 25. The processing unit 23 accesses the sales promotion device 1 using the acquired URL as the destination, and transmits the acquired user-specific information and information of a password of the shop and a use amount of service (the number of people using the service, an amount of money, the number of purchases, or the like) input through the input unit 22.

The storage unit 12 of the sales promotion device 1 associates and stores a password of a shop and a campaign ID of a campaign executed by the shop in advance. The new registration unit 133 specifies the campaign based on the URL used in the access, and performs authentication by matching the password stored in the storage unit 12 in association with the campaign ID of the specified campaign against the received password. When the authentication is successful, the new registration unit 133 specifies the distribution information stored in the storage unit 12 using the received user-specific information as the key, and reads the user ID. Then, the sales promotion device 1 performs the process from step S320 like when the above-described coupon is provided. Also, when the user-specific information is a serial number, the process from step S310 of Fig. 10 is performed like when the coupon is provided.

Also, in step S345, the privilege update unit 136 of the sales promotion device 1 updates the privilege information set in association with a parent ID to a privilege of content in which a privilege according to a use amount of service is added. For example, the privilege update unit 136 calculates the number of assigned points by multiplying the number of purchase points read from the assigned privilege information by a coefficient according to the use amount of service. Therefore, the privilege update unit 136 updates each of the number of introduction points and the number of accumulated points of the privilege information set by associating the campaign participation information with a parent ID to the number of points obtained by adding the number of assigned points. In addition, in step S355, the distribution unit 135 further provides a notification of a URL of a campaign site of the sales promotion device 1 from which special sales information can be downloaded.

Upon determining to use the shop by reading an introductory essay, the introduced person accesses the sales promotion device 1 from the terminal device 2 using the URL of the campaign site URL of the notification and transmits his/her own user ID and a distribution request for special sales information. The campaign information providing unit 132 of the sales promotion device 1 transmits the special sales information requested through the received distribution request to the terminal device 2 of the introduced person. The introduced person prints the special sales information received by the terminal device 2 on paper. In addition, the campaign information providing unit 132 writes the distribution information obtained by associating the user ID of the introduced person and the user-specific information represented by the two-dimensional barcode included in the special sales information to the storage unit 12. Information for specifying the user may be a child ID.

The introduced person hands over the paper on which the special sales information is printed to the shop at the time of accounting in the shop. As described above, the reading unit 25 of the terminal device 2 of the shop reads the two-dimensional barcode printed on paper received from the introduced person. The processing unit 23 acquires the user-specific information and the URL of the campaign participation registration site from the read two-dimensional barcode. The processing unit 23 accesses the sales promotion device 1 using the acquired URL as the destination, and transmits the acquired user-specific information and information of a password of its own shop and a use amount of service input through the input unit 22.

Upon performing authentication by the password as described above, the new registration unit 133 of the sales promotion device 1 reads the user ID from the distribution information stored in the storage unit 12 in correspondence with the received user-specific information. Thereby, the sales promotion device 1 performs the process from step S320 like when the above-described coupon is provided. Also, when the user-specific information is a serial number, the process from step S310 of Fig. 10 is performed like when the above-described coupon is provided.

Also, in step S510, the privilege update unit 136 of the sales promotion device 1 updates the privilege information set in association with a child ID to a privilege of content in which a privilege according to a use amount of service is added as in step S345. In addition, in step S550, the distribution unit 135 further provides a notification of a URL of a campaign site of the sales promotion device 1 from which special sales information can be downloaded and does not provide a notification of a child ID.

Thereby, it is not necessary to modify a cash register for printing the two-dimensional barcode on a receipt or to prepare paper to be distributed in a shop such as a mass merchandiser, a supermarket, or a department store. Consequently, the shop can inexpensively execute the campaign.

The above, for example, is applicable to the following example.

The sales promotion device 1 provides an electronic flyer of a mass merchandiser or the like as the special sales information in the SNS. For example, user A downloads the electronic flyer from the sales promotion device 1, outputs the downloaded electronic flyer on paper, and hands over the electronic flyer when using the mass merchandiser. In the mass merchandiser, the two-dimensional barcode printed on the electronic flyer is read by a personal computer or the like of the mass merchandiser. The terminal device 2 of the mass merchandiser notifies the sales promotion device 1 of an amount of purchase money of user A to perform campaign participation registration. The sales promotion device 1 assigns points according to the amount of purchase money as a privilege and assigns the right to send introduction information to a fried to the introducer.

When user A introduces content of the mass merchandiser, content of a purchased product, or the like to a friend (user B, C, or D) through introduction information, user B reading an introductory essay downloads an electronic flyer from the sales promotion device 1 and prints the downloaded electronic flyer on paper. Then, at the time of accounting in the mass merchandiser, user B submits the paper on which the electronic flyer is printed. When the two-dimensional barcode printed on the electronic flyer is read by the personal computer or the like in the mass merchandiser, campaign registration is performed by notifying the sales promotion device 1 of an amount of purchase money of user B. The sales promotion device 1 assigns points according to the amount of purchase money to users A and B as a privilege, and also assigns the right to send introduction information to user B. Thereafter, this is iterated.

In addition, in the mass merchandiser or the like, there is a place in which a point card dedicated for the shop is issued. In addition, the user may make payment in the shop using a credit card or the like. Therefore, the campaign participation registration of the user is performed using the point card, the credit card, or the like.

In this case, the sales promotion device 1 operates as follows.

An SNS site management company holding the sales promotion device 1 makes a contract with a point card management company or a credit company (hereinafter collectively referred to as a "card company") and links user information. The sales promotion device 1 is connected to a card management server of the card company via the network 9.

Initially, each user registers a card number of his/her own held credit card or point card or the like in the sales promotion device 1. In the card number, identification information of the credit card company or identification information of a shop from which the point card has been issued is included.

The processing unit 23 of the terminal device 2 of the user accesses the sales promotion device 1 using the URL of a card registration site as the access destination, and transmits user confirmation information such as a user ID, a card number, a user name, an address, etc. input through the input unit 22. The card registration unit 139 of the sales promotion device 1 determines whether the received card number is registered in the user information stored in the storage unit 12. When the received card number is registered in any user information, the card registration unit 139 transmits an error to the terminal device 2.

When the received card number is not yet registered, the card registration unit 139 specifies the user information stored in the storage unit 12 in correspondence with the user ID. Then, the card registration unit 139 performs user confirmation according to whether the received user confirmation information is consistent with information of a user name, an address, or the like set in the specified user information. When the user confirmation has been successful, the processing unit 13 registers the card number in the specified user information. Thereby, it is possible to specify the user according to the card number.

The terminal device 2 of the introducer accesses the sales promotion device 1 according to the URL of the campaign of the SNS, and transmits the user ID and a distribution request for requesting the distribution of special sales information of a shop (or a shopping district) as campaign information to the sales promotion device 1. The campaign information providing unit 132 of the sales promotion device 1 transmits the special sales information requested through the distribution request to the terminal device 2 of the introducer.

When the introducer inputs the transmission of purchase declaration through the input unit 22 of the terminal device 2, the processing unit 23 transmits a purchase declaration notification as a participation declaration notification for the campaign to the sales promotion device 1. Upon receiving the purchase declaration notification, the card registration unit 139 of the sales promotion device 1 specifies user information stored in the storage unit 12 according to a user ID and reads a card number. The card registration unit 139 specifies the credit card company or the shop from which the point card has been issued from the card number. Then, the card registration unit 139 transmits purchase declaration information to the card management server of the specified credit card company or the card management server of the point card management company which manages the point card of the specified shop.

In the purchase declaration information, a URL of the campaign participation registration site corresponding to the distributed special sales information, a shop ID of a shop of a campaign target, and a card number are set. The card management server stores the received purchase declaration information.

When the introducer purchases an article in a shop, a notification of the card number of a credit card or a point card used at the time of payment and a shop ID is provided from a POS system of the shop to the card management server of the card company.

The card management server performs the following process when the card number and the shop ID received from the POS system of the shop are stored in association with the stored purchase declaration information. That is, the card management server reads the URL of the campaign participation site from the purchase declaration information specified according to the card number and the shop ID.

The card management server accesses the sales promotion device 1 using the read URL as the access destination and transmits the card number.

The new registration unit 133 of the sales promotion device 1 specifies user information stored in the storage unit 12 according to the card number received from the card management server, and reads the user ID. Then, the sales promotion device 1 performs the process from step S320 of Fig. 10 like when the above-described coupon is provided.

Also, when a notification of an amount of purchase money has been provided from the card management server, the privilege update unit 136 may perform the following process in step S345. That is, the privilege update unit 136 may update each of the number of purchase points and the number of accumulated points of privilege information set in association with a parent ID to the number of points obtained by adding the number of purchase points according to an amount of purchase money.

In addition, in step S355, the distribution unit 135 further provides a notification of a URL of a campaign site of the sales promotion device 1 from which special sales information can be downloaded.

Upon determining to use the shop by reading an introductory essay, the introduced person accesses the sales promotion device 1 from the terminal device 2 using the URL of the campaign site of the notification and transmits his/her own user ID and a distribution request for special sales information. The campaign information providing unit 132 of the sales promotion device 1 transmits the special sales information requested through the received distribution request to the terminal device 2 of the introduced person. Like the introducer, the introduced person performs purchase declaration.

Upon receiving the purchase declaration notification from the terminal device 2 of the introduced person, the new registration unit 133 of the sales promotion device 1 performs the following process. That is, the new registration unit 133 transmits purchase declaration information in which the card number read from the user information of the introduced person specified by the user ID, the URL of the campaign participation registration site corresponding to the distributed special sales information, and the shop ID of the shop executing the campaign are set to the card management server.

Then, the card management server stores the received purchase declaration information.

When the introduced person purchases an article in a shop, a notification of the card number of a credit card or a point card used at the time of payment and a shop ID is provided from the POS system of the shop to the card management server of the card company. As described above, the card management server accesses the sales promotion device 1 using the URL of the campaign site set in the purchase declaration information in correspondence with the card number and the shop ID as the access destination and transmits the card number.

The new registration unit 133 of the sales promotion device 1 specifies user information stored in the storage unit 12 according to the card number received from the card management server, and reads the user ID. Then, the sales promotion device 1 performs the process from step S320 of Fig. 10 like when the above-described coupon is provided. Also, when the notification of an amount of purchase money has been provided from the card management server, each of the number of purchase points and the number of accumulated points of privilege information set in association with a child ID may be updated to the number of points obtained by adding the number of purchase points according to an amount of purchase money in step S510. In addition, in step S515, each of the number of introduction points and the number of accumulated points of the privilege information set in association with the parent ID may be updated to the number of points obtained by adding the number of fixed introduction points regardless of a purchase amount.

Also, when the campaign target is a product, the card registration unit 139 of the sales promotion device 1 transmits purchase declaration information in which a product ID for specifying the product of the campaign target is set to the card management server in place of a shop ID of a shop of the campaign target. Then, the POS system of the shop further notifies the card management server of the card company of the product ID of the purchased product. The card management server specifies the purchase declaration information according to the card number and the product ID received from the POS system of the shop. Then, the card management server transmits the card number by accessing the sales promotion device 1 using the URL of the campaign site set in the specified purchase declaration information as the access destination.

In addition, the campaign participation registration of the introduced person may be similar to that when the introduced person reads the two-dimensional barcode from paper on which the special sales information has been printed in the terminal device 2 of the shop. In this case, the campaign information providing unit 132 of the sales promotion device 1 transmits distribution information in which a two-dimensional barcode representing the user-specific information and the URL of the campaign participation registration site is associated to the terminal device 2 of the introduced person.

In addition, the sales promotion device 1 may also serve as the card management server of the point card management company.

According to the above description, for example, each user registers the card number of his/her own used point card or credit card in the sales promotion device 1. When user A declares the purchase based on the special sales information provided by the SNS from the sales promotion device 1, the sales promotion device 1 notifies the card management server of information of the declaration. Upon detecting that user A has shopped in the mass merchandiser of a purchase-declared campaign target using a card of a registered card number (has participated in a participation-declared campaign), the sales promotion device 1 requests that a notification of the card number of the used card and the campaign participation registration be transmitted. When user A purchases a product in the mass merchandiser, the sales promotion device 1 is notified of the card number of the card used by user A and the campaign participation registration from the card management server. Therefore, the sales promotion device 1 assigns points as a privilege to user A and assigns the right to send introduction information to a friend.

User A introduces content of the mass merchandiser, content of a purchased product, or the like to a friend (user B, C, or D) through introduction information. When using the card, user B reading an introductory essay performs purchase declaration like user A. The sales promotion device 1 notifies the card management server of information of the declaration.

Upon detecting that user B has shopped in the mass merchandiser of a purchase-declared campaign target using a card of a registered card number (has participated in a participation-declared campaign), the sales promotion device 1 performs the following process. That is, the sales promotion device 1 requests that a notification of the card number and the campaign participation registration be transmitted.

Thereafter, when user B actually purchases an article, the card management server notifies the sales promotion device 1 of the card number of the card used by user B and the campaign participation registration, and the sales promotion device 1 assigns points to users B and A. Thereafter, the above is iterated.

Also, in the above, it is possible to mail a gift certificate or the like by changing accumulated points thereto because an address is used as identity confirmation when the card number is registered.

Next, the second embodiment of the present invention will be described. In the second embodiment, the campaign registration of the user is performed using the point card, the credit card, or the like. In the second embodiment, the sales promotion device 1 operates as follows.

When the introducer purchases a product in a shop, a notification of the card number of a credit card or a point card used at the time of payment, a shop ID, and a product ID of the purchased product is provided from a POS system of the shop to a card management server of a card company. The card management server stores purchase history information in which the card number, the shop ID, and the product ID received from the POS system of the shop are associated. After the product is purchased, the introducer accesses the sales promotion device 1 according to the URL of the campaign participation registration site of the SNS from his/her own terminal device 2 and transmits the user ID and the card number.

The new registration unit 133 of the sales promotion device 1 specifies a campaign based on the URL used in the access, and performs the process from step S320 of Fig. 10. Then, before the process of step S335, the new registration unit 133 specifies a credit card company or a shop from which a point card has been issued from the received card number. The new registration unit 133 transmits a campaign participation inquiry in which the card number and a shop ID or a product ID representing a target of a specified campaign are set to the card management server. The card management server is a server of the specified credit card company or a server of the point card management company which manages the point card of the specified shop.

The card management server searches for whether there is purchase history information in which the card number and the shop ID or the product ID set in the campaign participation inquiry are set in the stored purchase history information. For example, when a campaign is executed for use of a specific shop, a shop ID is searched for. When a campaign is executed for purchase of a specific product, a product ID is searched for. When the purchase history information has been specified as a search result, the card management server returns the specified purchase history information as a campaign participation confirmation notification to the sales promotion device 1. The new registration unit 133 of the sales promotion device 1 determines whether the purchase history information received as the campaign participation confirmation notification is stored as campaign participation completion in the storage unit 12. When the received purchase history information is not registered to be campaign participation completion, the new registration unit 133 associates campaign participation confirmation completion with the received purchase history information, writes an association result to the storage unit 12, and performs the process from step S335 of Fig. 10.

Then, when the introduced person purchases a product in the shop, the card management server stores purchase history information in which the card number, the shop ID, and the product ID received from the POS system of the shop are associated as described above. After the product is purchased, the introduced person accesses the sales promotion device 1 according to the URL of the campaign participation registration site of the SNS from his/her own terminal device 2 and transmits the user ID, the child ID, and the card number.

The new registration unit 133 of the sales promotion device 1 specifies a campaign based on the URL used in the access, and performs the process from step S320 of Fig. 10. Then, before the process of step S505 of Fig. 11, the privilege update unit 136 specifies a credit card company or a shop from which a point card has been issued from the received card number. The privilege update unit 136 transmits a campaign participation inquiry in which the card number and a shop ID or a product ID representing a target of a specified campaign are set to the card management server. The card management server is a server of the specified credit card company or a server of the point card management company which manages the point card of the specified shop.

The card management server performs the following process when purchase history information in which the card number and the shop ID or the product ID set in a campaign participation inquiry are set is specified as described above. That is, the card management server returns the specified purchase history information as a campaign participation confirmation notification to the sales promotion device 1.

When the purchase history information received as the campaign participation confirmation notification is not stored as campaign participation completion in the storage unit 12, the privilege update unit 136 of the sales promotion device 1 performs the following process. That is, the privilege update unit 136 associates campaign participation confirmation completion with the received purchase history information, writes an association result to the storage unit 12, and performs the process from step S505 of Fig. 11.

Also, the card management server in the second embodiment may be configured to associate and store whether the sales promotion device 1 has been notified of the specified purchase history information for the campaign participation inquiry from the sales promotion device 1. In this configuration, the card management server returns the purchase history information to the sales promotion device 1 when notification completion is not stored in association with the specified purchase history information for the campaign participation inquiry from the sales promotion device 1. Then, the card management server stores the notification completion in association with the specified purchase history information. In this case, the sales promotion device 1 may not determine whether the received purchase history information is registered as the campaign participation completion.

In the second embodiment, it is necessary only to add a function of responding to an inquiry from the sales promotion device 1 to the card management server so as to use an existing purchase history management function which is performed between the POS system of the shop and the card management server of the card company. Consequently, the load on the shop or the card company is low.

In addition, the purchase history information in the second embodiment has a card number and at least one of a shop ID of a shop in which a product has been purchased according to the card number and a product ID of the purchased product. Information of a product purchase date, an amount of purchase money, or the like may be included in the purchase history information.

According to the above description, for example, when user A shops in a mass merchandiser of a campaign target, information of the card used in shopping is transmitted to the campaign participation registration site of the SNS. The sales promotion device 1 confirms a purchase history with the card management server of the card company which manages the card. When the product purchase in the mass merchandiser of the campaign target has been confirmed in the card management server, the sales promotion device 1 assigns points of the SNS to user A and assigns an introduction qualification for the campaign for others.

User A introduces content of the mass merchandiser, content of a purchased product, or the like to a friend (user B, C, or D) through introduction information. After shopping in the mass merchandiser of the campaign target, user B reading an introductory essay transmits information of a card and a child ID to the campaign participation registration site of the SNS.

The sales promotion device 1 confirms a purchase history with the card management server, assigns points to users B and A when a product purchase in the mass merchandiser of the campaign target has been confirmed, and assigns an introduction qualification of the campaign for others. Thereafter, this is iterated.

Also, the sales promotion device 1 may pre-register the card ID of the card owned by the user in the user information as in the first embodiment in which the card is pre-registered. Then, the sales promotion device 1 may specify the user information according to the user ID received from the terminal device 2 of the introducer or the introduced person at the time of campaign participation registration, and read the card number.

Next, the third embodiment of the present invention will be described. In the third embodiment, when the campaign participation registration of the user is performed using a credit card, the campaign target is a product and the card management server is not notified of information of the purchased product. In the third embodiment, the sales promotion device 1 is configured to operate as follows.

When the introducer purchases an article in a shop, a notification of information of the card number of a credit card used at the time of payment, a product ID of a purchased product, a product purchase date, an amount of product purchase money, or the like is provided from a POS system of the shop to a product purchase history server of the shop. The product purchase history server stores purchase history information in which the card number, the product ID, the product purchase date, the product purchase money amount, etc. received from the POS system are associated. Further, the notification of the card number, the shop ID, the product purchase date, and the product purchase money amount is provided from the POS system of the shop to the card management server of the credit card company. The card management server stores purchase history information in which the card number, the shop ID, the product purchase date, the product purchase money amount, etc. received from the POS system of the shop are associated. After the product is purchased, the introducer accesses the sales promotion device 1 according to the URL of the campaign participation registration site of the SNS from his/her own terminal device 2 and transmits the user ID, the card number, and the product purchase date.

The new registration unit 133 of the sales promotion device 1 specifies a campaign based on the URL used in the access, and performs the process from step S320 of Fig. 10. Then, before the process of step S335, the new registration unit 133 specifies a credit card company from the received card number. Then, the new registration unit 133 transmits a shop inquiry in which the card number and the product purchase date are set to the card management server of the specified credit card company.

The card management server searches for whether there is purchase history information in which a card number and a product purchase date set in a shop inquiry are set in the stored purchase history information. When the purchase history information has been specified as a search result, the card management server returns the shop ID set in the specified purchase history information to the sales promotion device 1. Upon receiving the shop ID, the new registration unit 133 of the sales promotion device 1 specifies the shop according to the shop ID.

The new registration unit 133 of the sales promotion device 1 transmits a campaign participation inquiry in which the card number, the product purchase date, and the product ID of the product of the campaign target are set to the product purchase history server of the specified shop. The product purchase history server searches for whether there is purchase history information in which the card number, the product purchase date, and the product ID set in the campaign participation inquiry are set in the stored purchase history information. When the purchase history information has been specified as a search result, the product purchase history server returns the specified purchase history information as a campaign participation confirmation notification to the sales promotion device 1. The new registration unit 133 of the sales promotion device 1 determines whether the received purchase history information is stored as campaign participation completion in the storage unit 12. When the received purchase history information is not registered to be campaign participation completion, the new registration unit 133 associates the campaign participation confirmation completion with the received purchase history information, writes an association result to the storage unit 12, and performs the process from step S335 of Fig. 10.

Then, when the introduced person purchases a product in the shop, the product purchase history server of the shop stores purchase history information in which the card number, the product ID, the product purchase date, the product purchase money amount, etc. received from the POS system are associated as described above. In addition, the card management server of the credit card company stores purchase history information in which the card number, the shop ID, the product purchase date, and the product purchase money amount are associated. After the product is purchased, the introduced person accesses the sales promotion device 1 according to the URL of the campaign participation registration site of the SNS from his/her own terminal device 2 and transmits the user ID, the child ID, the card number, and the product purchase date.

The new registration unit 133 of the sales promotion device 1 specifies a campaign based on the URL used in the access, and performs the process from step S320 of Fig. 10. Then, before the process of step S505 of Fig. 11, the privilege update unit 136 specifies a credit card company from the received card number. Then, the privilege update unit 136 transmits a shop inquiry in which the card number and the product purchase date are set to the card management server of the specified credit card company.

As described above, the card management server reads the shop ID from the purchase history information in which the card number and the product purchase date set in the shop inquiry are set and returns the read shop ID to the sales promotion device 1. The privilege update unit 136 of the sales promotion device 1 transmits a campaign participation inquiry in which the card number, the product purchase date, and the product ID of the product of the campaign target are set to the product purchase history server of the shop specified according to the received shop ID.

The product purchase history server returns purchase history information in which the card number, the product purchase date, and the product ID set in the received campaign participation inquiry are set as a campaign participation confirmation notification to the sales promotion device 1.

When the received purchase history information is not stored as campaign participation completion in the storage unit 12, the privilege update unit 136 of the sales promotion device 1 performs the following process. That is, the privilege update unit 136 associates campaign participation confirmation completion with the received purchase history information, writes an association result to the storage unit 12, and performs the process from step S505 of Fig. 11.

According to the above description, for example, when user A purchases a product of a campaign target in the shop, information of the card used in shopping and the product purchase date are transmitted to the campaign participation registration site of the SNS. The sales promotion device 1 acquires information of a shop in which user A has shopped by confirming a purchase history with the card management server of the card company. When a purchase of a product of the campaign target has been confirmed in the product purchase history server of the shop in which user A has shopped, the sales promotion device 1 assigns points of the SNS to user A and assigns an introduction qualification for the campaign for others.

User A introduces content of the purchase product or the like to a friend (user B, C, or D) through introduction information. After purchasing a product of the campaign target, user B reading an introductory essay transmits information of a card, a product purchase date and time, and a child ID to the campaign participation registration site of the SNS. The sales promotion device 1 acquires information of the shop in which user B has shopped by confirming a purchase history with the card management server. When a purchase of the product of the campaign target has been confirmed in the product purchase history server of the shop in which user B has shopped, the sales promotion device 1 assigns points to users B and A, and assigns an introduction qualification of the campaign for others. Thereafter, this is iterated.

Also, the sales promotion device 1 may pre-register the card ID of the card owned by the user in the user information as in the first embodiment in which the card is pre-registered. Then, the sales promotion device 1 may specify the user information according to the user ID received from the terminal device 2 of the introducer or the introduced person at the time of campaign participation registration, and read the card number.

In addition, the product purchase history server in the third embodiment may be configured to associate and store whether the sales promotion device 1 has been notified of the specified purchase history information for the campaign participation inquiry from the sales promotion device 1.

In this configuration, when notification completion is not stored in association with the specified purchase history information for the campaign participation inquiry from the sales promotion device 1, the following process is performed. That is, the purchase history information for the product purchase history server is returned and the notification completion is stored in association with the specified purchase history information.

In this case, the sales promotion device 1 may not determine whether the received purchase history information is registered as the campaign participation completion.

As described above, according to the third embodiment, the user who is a consumer can easily obtain information of a campaign related to sales promotion. Further, the introduction of a product or a campaign from the user (introducer) participating in the campaign to another user (introduced person) is easily transmitted using a group of the SNS. Then, when the introduced person has participated in the campaign by purchasing a product or the like, a privilege is also assigned to the introducer who has introduced the campaign to the introduced person. Consequently, it is possible to effectively improve the effect of sales promotion because the introducer has the desire to actively introduce the campaign. In addition, because the introduced person is an acquaintance belonging to the same group in an SNS as the introducer transmitting the introduction information, content of the introduction information is considered to have high credibility. Consequently, the introduced person tends to be interested in an introduced product or the like, and therefore it is also possible to effectively improve the effect of sales promotion.

In addition, the aggregation of information about sales of a product is facilitated from campaign participation information registered in the sales promotion device 1, and the aggregation can be performed in real time. In addition, the effect of the campaign can be reported to an enterprise or the like of the subject of the campaign in real time.

For example, the processing unit 13 of the sales promotion device 1 periodically specifies campaign participation information for each campaign ID, and totalizes the number of users to whom a privilege is assigned by referring to privilege information of the specified campaign participation information. The processing unit 13 transmits the result of the transition of the number of users totalized from the campaign participation information specified according to the campaign ID or the campaign participation information itself to the server of the enterprise specified according to the campaign ID.

Also, the sales promotion device 1 and the terminal device 2 described above internally have a computer system. Further, operation processes of the processing unit 13 of the sales promotion device 1 and the processing unit 23 of the terminal device 2 are stored in a computer-readable recording medium in the form of a program. The above-described processes are performed by causing the computer system to read and execute the program. Also, the computer system described here includes a central processing unit (CPU), various types of memories, an operating system (OS), and hardware such as peripheral devices.

In addition, the "computer system" also includes a homepage providing environment (or displaying environment) when a World Wide Web (WWW) system is used.

In addition, the "computer-readable recording medium" refers to a storage device including a flexible disk, a magneto-optical disc, a read only memory (ROM), a portable medium such as a compact disc (CD)-ROM, and a hard disk embedded in the computer system. The "computer-readable recording medium" includes a computer-readable recording medium for dynamically holding a program for a short time as in a communication line when the program is transmitted via a network such as the Internet or a communication circuit such as a telephone circuit and a computer-readable recording medium for holding the program for a predetermined time as in a volatile memory inside the computer system including a server and a client when the program is transmitted. In addition, the above-described program may be used to implement some of the above-described functions. In addition, the program may implement the above-described functions in combination with a program already recorded on the computer system.

### [Industrial Applicability]

The present invention can be applied to a sales promotion device, a sales promotion system, and a sales promotion method that can enable consumers to easily obtain information of a campaign or the like related to sales promotion and effectively improve the sales promotion according to the campaign or the like.

### [Reference Symbols]

1 Sales promotion device
11 Communication unit
12 Storage unit
13 Processing unit
131 Networking site providing unit
132 Campaign information providing unit
133 New registration unit
134 Introduced person registration unit
135 Distribution unit
136 Privilege update unit
137 Member registration site providing unit
138 Shopping site providing unit
139 Card registration unit
2, 2a, 2b, 2c, 2d Terminal device
21 Communications unit
22 Input unit
23 Processing unit
24 Display unit
25 Reading unit
26 Storage unit
27 Position acquisition unit
9 Network

## Claims

1. A sales promotion device comprising:
a storage unit configured to store a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person;
a campaign information providing unit configured to transmit the campaign information read from the storage unit to the terminal device;
a new registration unit configured to receive participation campaign-specific information for specifying the campaign of participation from the terminal device of the user who is an introducer and write the campaign participation information obtained by associating the campaign identification information of the campaign specified by the received participation campaign-specific information, the introducer identification information corresponding to the introducer, and the privilege information representing a privilege assigned to the introducer to the storage unit;
an introduced person registration unit configured to receive introduction information representing introduction content related to the campaign from the terminal device of the introducer, specify another user belonging to the same group as the introducer as an introduced person by referring to the group information, and write introduced person identification information corresponding to the specified introduced person to the campaign participation information written by the new registration unit;
a distribution unit configured to distribute the introduction information to the terminal device of the introduced person specified by the introduced person registration unit; and
a privilege update unit configured to receive the participation campaign-specific information from the terminal device of the user who is the introduced person, specify the campaign participation information according to the campaign identification information of the campaign specified by the received participation campaign-specific information and the introduced person identification information corresponding to the introduced person, write the privilege information representing a privilege assigned to the introduced person by associating the specified campaign participation information with the introduced person identification information of the introduced person, and update the privilege information set by associating the specified campaign identification information with the introducer identification information to information in which an additional privilege is assigned.

2. The sales promotion device according to claim 1, wherein the introduced person registration unit receives the introduction information from the terminal device of the introduced person, and specifies still another user belonging to the same group as the introduced person as an introduced person by referring to the group information.

3. The sales promotion device according to claim 1, wherein the introduced person registration unit receives the introduction information from the terminal device of the introduced person, specifies still another user belonging to the same group as the introduced person as a new introduced person by referring to the group information, and writes campaign participation information obtained by associating the campaign identification information, the introducer identification information corresponding to the introduced person, and the introduced person identification information corresponding to the new introduced person to the storage unit.

4. The sales promotion device according to claim 1,
wherein the introduced person registration unit writes child identification information as introduced person identification information to the specified introduced person and writes the assigned child identification information to the campaign participation information written by the new registration unit, and
wherein the privilege update unit specifies the campaign participation information according to the campaign identification information of the campaign and the child identification information corresponding to the introduced person.

5. The sales promotion device according to claim 4,
wherein the distribution unit further distributes the child identification information of the introduced person, and
wherein the privilege update unit further receives the child identification information of the introduced person from the terminal device of the introduced person.

6. The sales promotion device according to claim 1,
wherein the introduced person registration unit writes the user identification information of the specified introduced person as introduced person identification information to the campaign participation information written by the new registration unit, and
wherein the privilege update unit assigns child identification information to the introduced person when receiving the participation campaign-specific information from the terminal device of the introduced person, writes the child identification information of the introduced person and the privilege information representing a privilege assigned to the introduced person by associating the campaign participation information specified by the campaign identification information and the user identification information of the introduced person with the user identification information of the introduced person, and updates the privilege information set by associating the specified campaign identification information with the introducer identification information to information in which an additional privilege is assigned.

7. The sales promotion device according to claim 6, wherein the privilege update unit further receives the user identification information of the introduced person from the terminal device of the introduced person.

8. The sales promotion device according to claim 1, wherein the introduced person registration unit receives the introduction information from the terminal device of the introducer, specifies other users belonging to the same group as the introducer by referring to the group information, and specifies a user yet unspecified as an introduced person for another introducer among the other specified users as an introduced person.

9. The sales promotion device according to claim 1,
wherein the campaign information includes campaign execution place information representing a place at which the campaign is executed, and
wherein the campaign information providing unit specifies campaign information including the campaign execution place information representing a place within a predetermined distance from a current position of the terminal device represented by position information received from the terminal device and transmits the specified campaign information to the terminal device.

10. The sales promotion device according to claim 1,
wherein the storage unit further stores association of the campaign identification information and a serial number used in participation registration of the campaign,
wherein the new registration unit receives the participation campaign-specific information and the serial number in the campaign from the terminal device of the introducer and writes the campaign participation information to the storage unit and writes the received serial number as a used serial number to the storage unit in association with the campaign identification information when the received serial number is not stored in the storage unit as the used serial number in correspondence with the campaign identification information of the campaign specified by the received participation campaign-specific information, and
wherein the privilege update unit receives the participation campaign-specific information and the serial number from the terminal device of the introduced person, writes the privilege information representing a privilege assigned to the introduced person by associating the specified campaign participation information with introduced person identification information corresponding to the introduced person when the received serial number is not stored as the used serial number in the storage unit in correspondence with the campaign identification information of the campaign specified by the received participation campaign-specific information, updates the privilege information set by associating the specified campaign identification information with the introducer identification information to information in which an additional privilege is assigned, and further writes the received serial number as the used serial number to the storage unit in association with the received campaign identification information.

11. The sales promotion device according to claim 1, further comprising:
a member registration providing unit configured to provide a member registration site to the terminal device of the user, notify the new registration unit of campaign identification information corresponding to a join destination of an introducer, and output campaign identification information corresponding to a join destination of an introduced person to the privilege update unit,
wherein the new registration unit writes campaign participation information obtained by associating the campaign identification information corresponding to the join destination of the introducer, the introducer identification information corresponding to the introducer, and the privilege information representing a privilege assigned to the introducer to the storage unit, and
wherein the privilege update unit specifies the campaign participation information according to the campaign identification information corresponding to the join destination of the introduced person and the introduced person identification information corresponding to the introduced person.

12. The sales promotion device according to claim 10, wherein the participation campaign-specific information and the serial number are information read by the terminal device from an image or a character assigned to a purchased product or a printing material to be used when a product is purchased or a service is used.

13. The sales promotion device according to claim 10, wherein the campaign information providing unit distributes the participation campaign-specific information to the terminal device.

14. The sales promotion device according to claim 10, wherein the participation campaign-specific information and the serial number are information received by the terminal device from a shopping server providing a shopping site on a network to which the terminal device and the sales promotion device are connected.

15. The sales promotion device according to claim 10, further comprising:
a shopping site providing unit configured to provide a shopping site to the terminal device of the user and generate a serial number when a shopping process of the user in the shopping site has ended,
wherein the new registration unit specifies the campaign from a target of shopping of the introducer in the shopping site provided by the shopping site providing unit and receives the serial number generated when a shopping process of the introducer has ended from the shopping site providing unit, and
wherein the new registration unit further specifies the campaign from a target of shopping of the introduced person in the shopping site provided by the shopping site providing unit and receives the serial number generated when a shopping process of the introduced person has ended from the shopping site providing unit.

16. The sales promotion device according to claim 10,
wherein the campaign information providing unit transmits a coupon, the participation campaign-specific information, and the serial number to the terminal device of the user, and writes identification information of the user and the serial number to the storage unit,
wherein the new registration unit receives the participation campaign-specific information and the serial number from a terminal device of a shop used by the introducer in place of the terminal device of the introducer and specifies the introducer from user identification information stored in the storage unit in correspondence with the serial number, and
wherein the privilege update unit receives the participation campaign-specific information and the serial number from a terminal device of a shop used by the introduced person in place of the terminal device of the introduced person and specifies the introduced person from user identification information stored in the storage unit in correspondence with the serial number.

17. The sales promotion device according to claim 1,
wherein the campaign information providing unit further transmits the participation campaign-specific information and information for specifying the user to the terminal device of the user and associates and writes the user identification information and the information for specifying the user to the storage unit,
wherein the new registration unit receives the participation campaign-specific information and the information for specifying the user from a terminal device of a shop used by the introducer in place of the terminal device of the introducer, and specifies the introducer from user identification information stored in the storage unit in correspondence with the information for specifying the user, and
wherein the privilege update unit receives the participation campaign-specific information and the information for specifying the user from a terminal device of a shop used by the introduced person in place of the terminal device of the introduced person, and specifies the introduced person from user identification information stored in the storage unit in correspondence with the information for specifying the user.

18. The sales promotion device according to claim 1,
wherein the storage unit associates and stores the user identification information and a card number,
wherein the sales promotion device further comprises:
a card registration unit configured to receive a participation declaration notification for the campaign from the terminal device of the introducer or the terminal device of the introduced person, transmit participation campaign-specific information of the campaign for which participation has been declared according to the participation declaration notification and the card number corresponding to the user identification information of the introducer or the introduced person to the card management device for managing a card of the card number, and issue a request to transmit the participation campaign-specific information and the card number when detecting participation in the campaign in which the participation has been declared using the card of the transmitted card number,
wherein the new registration unit receives the participation campaign-specific information and the card number of the card used by the introducer from the card management device for managing the card used by the introducer in place of the terminal device of the introducer and specifies the introducer from the user identification information stored in the storage unit in correspondence with the card number, and
wherein the privilege update unit receives the participation campaign-specific information and the card number of the card used by the introduced person from the card management device for managing the card used by the introduced person in place of the terminal device of the introduced person and specifies the introduced person from the user identification information stored in the storage unit in correspondence with the card number.

19. The sales promotion device according to claim 1,
wherein the new registration unit receives the participation campaign-specific information and a card number of a card used by the introducer from the terminal device of the introducer, inquires about the participation in the campaign specified by the participation campaign-specific information by transmitting the received card number to the card management device for managing the card used by the introducer, and writes the campaign participation information to the storage unit when receiving a campaign participation confirmation notification according to the inquiry, and
wherein the privilege update unit receives the participation campaign-specific information and a card number of a card used by the introduced person from the terminal device of the introduced person, inquires about participation in the campaign specified by the participation campaign-specific information by transmitting the received card number to a card management device for managing the card used by the introduced person, writes the privilege information representing a privilege assigned to the introduced person by associating the specified campaign participation information with introduced person identification information of the introduced person when the campaign participation confirmation notification has been received according to the inquiry, and updates the privilege information set by associating the specified campaign identification information with the introducer identification information to information in which an additional privilege is assigned.

20. The sales promotion device according to claim 1,
wherein the new registration unit receives the participation campaign-specific information, a card number of a card used by the introducer, and a product purchase date from the terminal device of the introducer, inquires about a shop in which a product has been purchased by transmitting the received card number and the received product purchase date to a card management device for managing the card used by the introducer, inquires about a purchase history server of the shop specified by shop identification information acquired according to the inquiry about participation in a campaign specified by the participation campaign-specific information, and writes the campaign participation information to the storage unit when receiving a campaign participation confirmation notification according to the inquiry, and
wherein the privilege update unit receives the participation campaign-specific information, a card number of a card used by the introduced person, and a product purchase date from the terminal device of the introduced person, inquires about a shop in which a product has been purchased by transmitting the received card number and the received product purchase date to a card management device for managing the card used by the introduced person, inquires about a purchase history server of the shop specified by shop identification information acquired according to the inquiry about participation in a campaign specified by the participation campaign-specific information, writes the privilege information representing a privilege assigned to the introduced person by associating the specified campaign participation information with the introduced person identification information of the introduced person when a campaign participation confirmation notification has been received according to the inquiry, and updates the privilege information set by associating the specified campaign identification information with the introducer identification information to information in which an additional privilege is assigned.

21. The sales promotion device according to claim 1, wherein the privilege update unit further receives information of a use amount of service and further updates the privilege information set by associating the specified campaign participation information with the introducer identification information to information in which a privilege corresponding to the use amount of service is assigned.

22. The sales promotion device according to claim 1,
wherein the new registration unit further receives information of a use amount of service and writes the campaign participation information in which the privilege information representing a privilege assigned to the introducer has been set in correspondence with the use amount of service to the storage unit, and
wherein the privilege update unit further receives information of a use amount of service and writes the privilege information representing a privilege assigned to the introduced person in correspondence with the use amount of service by associating the specified campaign participation information with introduced person identification information of the introduced person.

23. The sales promotion device according to claim 1, wherein the participation campaign-specific information is an address used in access to the sales promotion device.

24. The sales promotion device according to claim 1, wherein the privilege information is points exchangeable for an article or service or is a right to participate in an event.

25. A sales promotion system comprising a terminal device of a user and a sales promotion device,
wherein the sales promotion device comprises:
a storage unit configured to store a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person;
a campaign information providing unit configured to transmit the campaign information read from the storage unit to the terminal device;
a new registration unit configured to receive participation campaign-specific information for specifying the campaign of participation from the terminal device of the user who is an introducer and write the campaign participation information obtained by associating the campaign identification information of the campaign specified by the received participation campaign-specific information, the introducer identification information corresponding to the introducer, and the privilege information representing a privilege assigned to the introducer to the storage unit;
an introduced person registration unit configured to receive introduction information representing introduction content related to the campaign from the terminal device of the introducer, specify another user belonging to the same group as the introducer as an introduced person by referring to the group information, and write introduced person identification information corresponding to the specified introduced person to the campaign participation information written by the new registration unit;
a distribution unit configured to distribute the introduction information to the terminal device of the introduced person specified by the introduced person registration unit; and
a privilege update unit configured to receive the participation campaign-specific information from the terminal device of the user who is the introduced person, specify the campaign participation information according to the campaign identification information of the campaign specified by the received participation campaign-specific information and the introduced person identification information corresponding to the introduced person, write the privilege information representing a privilege assigned to the introduced person by associating the specified campaign participation information with the introduced person identification information of the introduced person, and update the privilege information set by associating the specified campaign identification information with the introducer identification information to information in which an additional privilege is assigned,
wherein the terminal device comprises:
a display unit configured to display information; and
a processing unit configured to receive campaign information representing content of a campaign from the sales promotion device and display the received campaign information on the display unit,
wherein the processing unit provided in the terminal device of the user who is an introducer transmits participation campaign-specific information for specifying a participation campaign to the sales promotion device and transmits introduction information representing introduction content about the campaign to the sales promotion device, and
wherein the processing unit provided in the terminal device of the user who is an introduced person receives the introduction information from the sales promotion device to cause the display unit to display the received introduction information and transmits the participation campaign-specific information to the sales promotion device when participating in the campaign introduced by the introduction information.

26. A sales promotion method comprising:
storing, by a sales promotion device, a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person in a storage unit;
transmitting, by the sales promotion device, the read campaign information to the terminal device;
receiving, by the sales promotion device, participation campaign-specific information for specifying the campaign of participation from the terminal device of the user who is the introducer and writing the campaign participation information obtained by associating the campaign identification information of the campaign specified by the received participation campaign-specific information, the introducer identification information corresponding to the introducer, and the privilege information representing a privilege assigned to the introducer to the storage unit;
receiving, by the sales promotion device, introduction information representing introduction content related to the campaign from the terminal device of the introducer, specifying another user belonging to the same group as the introducer as an introduced person by referring to the group information, and writing introduced person identification information corresponding to the specified introduced person to the written campaign participation information;
distributing, by the sales promotion device, the introduction information to the terminal device of the specified introduced person; and
receiving, by the sales promotion device, the participation campaign-specific information from the terminal device of the user who is the introduced person, specifying the campaign participation information according to the campaign identification information of the campaign specified by the received participation campaign-specific information and the introduced person identification information corresponding to the introduced person, writing the privilege information representing a privilege assigned to the introduced person by associating the specified campaign participation information with the introduced person identification information of the introduced person, and updating the privilege information set by associating the specified campaign identification information with the introducer identification information to information in which an additional privilege is assigned.

27. A sales promotion method comprising:
storing, by a sales promotion device, a plurality of pieces of campaign information representing content of a campaign, group information obtained by associating identification information of a group and user identification information for identifying a user belonging to the group, and campaign participation information obtained by associating campaign identification information for specifying a campaign, introducer identification information representing an introducer, introduced person identification information representing an introduced person, and privilege information of each of the introducer and the introduced person in a storage unit;
transmitting, by the sales promotion device, the read campaign information to the terminal device;
displaying, by the terminal device, the campaign information received from the sales promotion device;
transmitting, by the terminal device of the user who is an introducer, participation campaign-specific information for specifying a participation campaign to the sales promotion device;
receiving, by the sales promotion device, participation campaign-specific information from the terminal device of the introducer and writing the campaign participation information obtained by associating the campaign identification information of the campaign specified by the received participation campaign-specific information, the introducer identification information corresponding to the introducer, and the privilege information representing a privilege assigned to the introducer to the storage unit;
transmitting, by the terminal device of the introducer, introduction information representing introduction content about the campaign to the sales promotion device;
receiving, by the sales promotion device, introduction information from the terminal device of the introducer, specifying another user belonging to the same group as the introducer as an introduced person by referring to the group information, and writing introduced person identification information corresponding to the specified introduced person to the written campaign participation information;
distributing, by the sales promotion device, the introduction information to the terminal device of the specified introduced person;
displaying, by the terminal device of the user who is an introduced person, the introduction information received from the sales promotion device;
transmitting, by the terminal device of the user who is the introduced person, participation campaign-specific information to the sales promotion device when participating in the campaign introduced according to the introduction information; and
receiving, by the sales promotion device, the participation campaign-specific information from the terminal device of the introduced person, specifying the campaign participation information according to the campaign identification information of the campaign specified by the received participation campaign-specific information and the introduced person identification information corresponding to the introduced person, writing the privilege information representing a privilege assigned to the introduced person by associating the specified campaign participation information with the introduced person identification information of the introduced person, and updating the privilege information set by associating the specified campaign identification information with the introducer identification information to information in which an additional privilege is assigned.
